(19) Europäisches Patentamt
European Patent Office
Office européen des brevets

(11) Publication number: **0 433 690 B1**

(12) **EUROPEAN PATENT SPECIFICATION**

(45) Date of publication of patent specification: **28.12.94**

(51) Int. Cl.[5]: **F02P 17/00**, F02P 11/06, F02P 5/15

(21) Application number: **90122329.7**

(22) Date of filing: **22.11.90**

# (54) Apparatus and method for detecting misfire in a cylinder of an internal combustion engine.

(30) Priority: **22.11.89 JP 301824/89**
**22.11.89 JP 301825/89**
**25.12.89 JP 332676/89**

(43) Date of publication of application:
**26.06.91 Bulletin 91/26**

(45) Publication of the grant of the patent:
**28.12.94 Bulletin 94/52**

(84) Designated Contracting States:
**DE GB**

(56) References cited:
**EP-A- 0 357 197**
**EP-A- 0 364 959**
**EP-A- 0 385 793**
**US-A- 4 578 755**

(73) Proprietor: **UNISIA JECS CORPORATION**
**1370, Onna**
**Atsugi-shi**
**Kanagawa-ken (JP)**

(72) Inventor: **Nakaniwa, Shinpei, c/o Japan Electronic Control**
**Systems Co., Ltd.,**
**No. 1671-1, Kasukawa-cho**
**Isesaki-shi,**
**Gunma-ken (JP)**
Inventor: **Ohtani, Seiichi, c/o Japan Electronic Control**
**Systems Co., Ltd.,**
**No. 1671-1, Kasukawa-cho**
**Isesaki-shi,**
**Gunma-ken (JP)**

(74) Representative: **Schoppe, Fritz, Dipl.-Ing.**
**Patentanwalt,**
**Georg-Kalb-Strasse 9**
**D-82049 Pullach (DE)**

EP 0 433 690 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to an apparatus and method for detecting a misfire cylinder of an internal combustion engine in accordance with the respective prior art portions of claims 1 and 7. More particularly, it relates to a misfire cylinder detection apparatus and method in which a misfire cylinder is detected in such a way that a discriminating value corresponding to the amount of mean effective pressure change in each cylinder is calculated on the basis of the rotational period of engine, and that the discriminating value is compared with a slice level.

In internal combustion engines, a misfire occurs due to malfunctions of the ignition system or fuel supplying system such as the fuel injection valve, or caused by pressure leakage from the cylinder. When the misfire occurs, the unburned fuel mixture is introduced to the exhaust system where the fuel mixture is burned in the catalytic converter installed therein, which causes damage to the converter. Such a thermal damage of the catalytic converter entails a problem that the toxic components of the exhaust gas are increased because the cleaning function of the converter system is impaired.

Therefore, it is necessitated that the occurrence of the misfire be detected and alarmed when detected, so that a fail safe control of the engine is executed in such a way that the fuel supply to the misfired cylinder is stopped.

An apparatus and a method of the above-mentioned type are disclosed in ISATA-Paper "Experiences with a new method for measuring the engine roughness" 1979, by R. Latsch, E. Mausner, V. Bianchi, which discloses a technique to discriminate the misfire cylinder on the basis of rotational speed change (roughness) of the engine.

More precisely, a misfire discriminating factor LUn is calculated for each of the cylinders, respectively. The factor LUn represents the engine roughness as the change of mean effective pressure of each cylinder. The misfired cylinder is detected on the basis of the discriminating factor LUn which is derived as follows.

Assuming that M represents the torque generated from the engine, W represents the torque from the load, $\omega$ represents the crank angular velocity, $\theta$ represents the inertia moment, t represents time, T represents the instantaneous value of the crank revolutional period, $\zeta$ represents the crank angle, J = 0,1,2,3,..., Tj represents two or one crank shaft revolution period, and $T_{j-1}$ represents the value of previous $T_j$ of one time before, the following equations are satisfied.

$$M - W = \theta \frac{d\omega}{dt}$$

$$M - W = \theta \, 2\pi \frac{d(1/T)}{dt}$$

$$M - W = \theta \, 2\pi \frac{d(1/T)}{d\zeta} \cdot \frac{d\zeta}{dt}$$

When the equations are integrated for one revolution of the crank, the following equation is derived.

$$\int_{(j-1)2\pi}^{j2\pi} (M - W)\, d\zeta = 2\pi^2 \theta \left( \frac{1}{T_j^2} - \frac{1}{T_{j-1}^2} \right)$$

Assuming that W is constant, and $T_j \fallingdotseq T_{j-1} \fallingdotseq T_{j-2}$, the following equation is derived.

$$\Delta \int_{(j-1)2}^{j2} M\, d\zeta \fallingdotseq -4\pi^2 \theta \frac{\Delta(\Delta Tj)}{Tj^3}$$

The left side of the above equation substantially corresponds to the average of effective pressure change amount $\Delta Pi$ of the engine which is closely related to the occurrence of misfire in the cylinder. Therefore, by calculating the right side of the equation which is related to the revolutional period, it becomes possible to indirectly obtain the average of effective pressure change, which enables to specify the misfired cylinder. Accordingly, it becomes possible to detect the misfired cylinder in such a way that the calculation result of the right side of the equation is used as the discriminating factor LUn to discriminate whether or not the average of effective pressure is changed more than a predetermined value for every cylinder.

In that case, the discriminating factor LUn is approximately corresponding to the change amount $\Delta Pi$ of the average of effective pressure Pi and represented as follows.

$$LUn = -4\pi^2 \theta \frac{\Delta(\Delta Tj)}{Tj^3}$$

The above equation can be simplified to make it easy to practically calculate as described below.

$\Delta(\Delta T_j) = (T_{j-1} - T_{j-2}) - (T_j - T_{j-1})$,

wherein with the case of four-cylinder internal combustion engine, it can be assumed that $T_{j-1}$ represents the period of 180 degrees before 360 degrees, that is, the TDC (Top Dead Center) period which is sampled at every TDC, that $T_{j-2}$ represents the period of 180 degrees before 720 degrees (two turns), and that Tj represents the latest period-of 180 degrees. Further, $Tj^3$ is replaced by Tj, $T_{j-1}$ or $T_{j-2}$ for the sake of easy calculation.

Assumption is made that the 180 degree period before 360 degrees (one turn) is designated by "half", that the 180 degree period before 720 degrees (two turns) is designated by "old", and that the latest 180 degree period is designated by "new", and $Tj^3$ is replaced by $T_{j-2}$ which is the 180 degree period before 720 degrees, i.e., "old". On the above mentioned assumption, the equation of LUn for discriminating the misfire can be simplified as follows.

$$LUn \fallingdotseq \frac{(\text{half} - \text{old}) - (\text{new} - \text{half})}{\text{old}}$$

The misfire discrimination factor LUn is determined on the basis of the above equation. For example, with respect to a four-cycle four-cylinder internal combustion engine, the discrimination factor LUn for #1 cylinder is calculated when the 180 degree period which is renewed by every TDC (180 degrees) is measured and the result thereof is such that the latest value is influenced from the inner pressure of the #1 cylinder in the combustion stroke process thereof. In that event, "new" is determined from the latest 180 degree period of the #1 cylinder, "half" is determined from the 180 degree period which is influenced from the inner pressure of the #4 cylinder at one turn before, and "old" is determined from the 180 degree period which is influenced from the inner pressure of the #1 cylinder at one cycle (two turns) before.

With the use of the discriminating factor LUn mentioned above, the misfired cylinder is detected basically in such a way that a cylinder is discriminated as being misfired when the value of LUn is less than a predetermined slice level SL for the discrimination value LU which level is determined from the driving conditions such as the engine revolutional speed and the engine load.

On the other hand, since the level for discriminating factor LU differs according to the driving conditions, it becomes necessary to change the slice level which is to be compared with the discriminating value LU in accordance with the driving conditions of the engine so that the misfire can be certainly detected irrespective of the driving conditions. For this purpose, in accordance with the prior art, a slice level map is prepared in advance for every engine so that an appropriate slice level is retrieved from the map in response to the driving conditions.

Therefore, to prepare the slice level map beforehand in response to the driving conditions, it requires a number of matching processes and a ROM of large capacity is needed to memorize the map. Besides, if the initial setting data of the map is wrong, misfires are not correctly detected.

Further, in accordance with the prior art, mentioned above, the TDC period is measured and the misfire discrimination factor LU is calculated on the basis of the TDC period. However, when the number of the cylinders is increased, for instance, there occurs a case wherein misfire is not accurately detected on the basis of the TDC period.

More precisely, with respect to the engine having an increased number of cylinders, a misfire occurred in one of the cylinders does not give much influence to the engine revolution when the remaining cylinders function normally so that the roughness of the crank velocity due to the misfire becomes small. Therefore, even when it is possible to detect the misfire of the four-cylinder engine on the basis of the TDC period, it may become difficult to detect the misfire of the eight-cylinder engine on the basis of the TDC period.

Also, though the misfire can be detected correctly with respect to the four-cylinder engine for example on the basis of the measurement result of the TDC period, there has been further requirement that the misfire discriminating value LU be changed further precisely in response to the occurrence of the misfire.

Besides, in accordance with the above mentioned arrangement using the discriminating factor LU wherein the misfire is detected by measuring the roughness of the crank angular velocity for every one cycle, the misfire is sometimes incorrectly detected since the engine roughness due to the misfire is hard to discriminate from that due to the torsional vibration which occurs for a predetermined time during and after the acceleration and deceleration states of the vehicle and results in roughness of the crank angular velocity.

The present invention is based on the object of raising the reliability of the misfire detection.

This object is achieved by a method in accordance with claim 1 and by an apparatus in accordance with claim 7.

According to the invention, the predetermined angle range for measuring the period is set such that the range is narrower than the period between the upper dead points of the compression stroke in each of the cylinders.

Due to this arrangement, it becomes possible to further accurately detect the roughness of the engine caused by the occurrence of misfire, by measuring the period of the specified range which is narrower than the period between the upper dead points in the compression stroke of each cylinder with regard to the engine in which roughness of the engine due to the misfire occurs within the period of compression upper dead point.

In accordance with an example of the misfire cylinder detecting method of the present invention, the misfired cylinder is detected in such a way that a period of a predetermined angle range is measured with a predetermined crank angle position in each cylinder being arranged as a reference position for measuring the period which range is peculiar to the engine and includes roughness of the crank angular velocity appeared therein, that a misfire discriminating value is calculated for each cylinder on the basis of the measured period which value is approximately corresponding to a change of average of the effective pressure in each cylinder, and that the calculated discriminating value is compared with a predetermined slice level.

In accordance with the method mentioned above, irrespective of the change of the angle range in which roughness of the revolution period due to the misfire according to the difference of the number of cylinders clearly appears, it becomes possible to cope with this change and accurately detect the misfired cylinder by changing the angle range for measuring the revolution period according to the conditions such as the cylinder number.

Due to the arrangement mentioned above, with regard to the engine in which the misfire occurs at an interval corresponding to the upper dead point period in the compression stroke, it becomes possible to detect the occurrence of misfire further reliably by selecting a specific angle range in the upper dead point period in the compression stroke. Also, with regard to the engine in which the occurrence of misfire does not clearly appear in the period of upper dead point in the compression stroke, it is possible to detect the occurrence of misfire in each cylinder by setting the range for measuring the period as being a predetermined times as large as the angle corresponding to the interval between the upper dead points in the compression stroke.

Other objects and variations of the present invention will be apparent from the following description of the embodiment of the invention with reference to the accompanying drawings.

Figure 1 is a block diagram showing the construction of the misfire cylinder detection apparatus of internal combustion engine;

Figure 2 is a schematic view of a system;

Figures 3A, 3B and 3C are flow charts of a control function;

Figures 4 and 5 are time charts representing the characteristic of the misfire cylinder detecting function;

Figure 6 is a graphical view representing the change of the misfire discriminating value LU in response to the engine revolution speed and the load of the engine.

Figure 7 is a schematic view of a system;

Figures 8 to 10 are flow charts representing the control function;

Figures 11 and 12 are time charts representing the characteristic of the misfire cylinder detecting function;

Figures 13A, 13B and 13C are flow charts representing the control function of the embodiment of the present invention;

Figure 14 is a time chart representing the period measuring range in accordance with the embodiment of the present invention; and

Figure 15 is a graphical view representing the revolution period change according to the occurrence of misfire in relation to the measured angle.

Fig. 1 illustrates an example of a schematic structure of the misfire cylinder detection apparatus of an internal combustion engine. Also, an embodiment of the apparatus and method for detecting a misfire cylinder of an internal combustion engine according to the present invention are illustrated in Figs. 13 to 15.

In Fig. 2, a four-cycle four-cylinder internal combustion engine 1 comprises a not shown crank shaft on which a signal disc plate 2 is installed. The disc plate 2 is made from a magnetic material and has 120 tooth like projections formed on the periphery thereof at an interval of every 3 degrees of crank angle (3° CA). An electromagnetic pickup 3 is disposed aside the disc plate 2 to detect the projections of 3° CA in such a way that an open end of the magnet of the pickup 3 is opened and closed by the projections of the disc plate 2 according to the rotation of the crank shaft on which the disc plate is installed so that an induced electromotive pulse signal is obtained. That is, a detection signal is generated at an interval of every 3° CA by the function of the disc plate 2 cooperating with the pickup 3.

Also, on a side surface of the signal disc plate 2 is formed a pair of bumps 2a and 2b which are coaxially disposed on the same circle about the rotary shaft. An electromagnetic pickup 4 is disposed facing the side surface of the disc plate 2. The pickup 4 detects the TDC by detecting the bumps 2a and 2b so that an induced electromotive pulse signal is obtained at an interval of every 180° CA. That is, a detection signal is generated at an interval of every 180° CA by the function of the bumps 2a and 2b of the disc plate 2 cooperating with the pickup 4.

In that case, the detection position of the pickup 4 is arranged so that the bumps 2a and 2b are detected at the timing synchronized with the top dead center position (TDC), whereby the TDC position of the compression stroke in each cylinder can be detected from, for example, the ignition signal and the TDC detection signal.

The induced electromotive force output from each of the pickups 3 and 4 is input to each of corresponding zerocross comparators 5 and 6 in which the induced electromotive force is converted to a pulse wave having a zero voltage center according to the level of the induced electromotive force with respect to the OV level. Each pulse wave is further shaped to a pulse wave having a low level of OV by each of waveform shaping circuits 7 and 8 connected from the comparators 5 and 6, respectively.

The waveform shaping circuit 7 outputs a pulse signal which rises (or falls) at an interval of 3° CA (referred to as 3° CA pulse hereinafter). The 3° CA pulse signal output from the circuit 7 is input to a timer-1 of a control unit 9 which includes a computer that executes the misfire cylinder detecting operation and controls the fuel supply to the engine 1. The timer-1 counts the pulse number of the 3° CA pulse signal.

Also, the other waveform shaping circuit 8 outputs a pulse signal which rises (or falls) at an interval of 180° CA at the position of TDC in each cylinder (referred to as TDC pulse hereinafter). The TDC pulse signal output from the circuit 8 is input to a trigger-1 of the control unit 9.

The control unit 9 measures the period of the TDC pulse signal, that is, the period of 180° CA (TDC). The control unit 9 also counts the 3° CA pulses by using the TDC pulse as a trigger and detects the timing of an interrupt operation for executing the misfire detection program at around, for example, ATDC 20°, so as to detect the misfire cylinder at an interval of 180° CA period.

It is to be noted that as the means for detecting the rotational position of the crank shaft, instead of the above mentioned type of means utilizing the induced electromotive pulses, an optical means may be used such as an arrangement in which slits are formed in the signal disc plate 2 so that the rotational position of the crank shaft is detected by detecting the light penetrating through the slits of the disc plate.

A misfire cylinder detecting program is described hereinafter with reference to the flow chart of Fig. 3 (Figs. 3A, 3B 3C). The program is executed interrupting the computer operation at the timing right after TDC which is detected by counting the 3° CA pulses in response to the TDC pulse.

It is to be noted that the constituent means such as the revolution period measuring means, the misfire discriminating value calculation means, the misfire cylinder discriminating means, the slice level changing and setting means, the changing ratio calculation means, the slice level setting means on the basis of changing ratio, and the slice level setting means on the basis of changing ratio and revolution velocity, are provided as means constituted by software, as illustrated in Fig. 3.

First, in step 1 (designated as S1 in the drawings, other steps designated in same way), the TDC period values of the latest value Tnew to Told4 which is the value four times before are renewed and memorized. The TDC period is measured as the interval of the TDC pulse input signal. In the case of the four-cylinder engine, the TDC period is 180°.

More precisely, the latest 180° period value obtained as the time from the TDC right before this program is executed to the preceding TDC is set as Tnew. The value of preceding Tnew which was used as Tnew in the preceding program operation is set in Told1 as the period data of one time before, that is 180° CA before. Similarly, the preceding period data Told1 is set in Told2 of this time as the period data of two times before, that is one turn before. Also, the preceding period data Told2 is set in Told3 of this time as the period data of three times before, that is 540° CA before. Further, the preceding period data Told3 is set in Told4 of this time as the period data of four times before, that is two turns before.

In the subsequent step 2, the misfire discriminating value LU is calculated from the following equation using the latest period data Tnew, the one-turn-before data Told2 that is the period data of 1/2 cycle before, and the two-turn-before data Told4 that is the period data of one cycle before, obtained in step 1.

$$LU = \frac{(\text{Told2} - \text{Told4}) - (\text{Tnew} - \text{Told2})}{\text{Told4}}$$

The above equation represents the same meaning as the following equation which is used to calculate the discriminating value LU which is approximately corresponding to the change of average of the effective pressure in each cylinder. Therefore, it is possible to presume the change of average of the effective pressure in the cylinder which is in the state of combustion stroke in the preceding TDC period.

$$LUn = \frac{(\text{half} - \text{old}) - (\text{new} - \text{half})}{\text{old}}$$

wherein "new" represents the latest 180° period data, "half" represent the 180° period data of one turn before, and "old" represents the 180° period data of two turns before.

After the misfire discriminating value LU is calculated in step 2, the flow moves to step 3 wherein the value LU is discriminated whether LU is negative or not, that is whether the average of the effective pressure is decreasing or not.

When the value LU is negative which means the mean effective pressure is decreasing, the flow moves to step 4 wherein the negative data of LU is renewed in time series using the preceding latest negative data of LU. That is, the data is renewed in such a way that the latest negative data of LU calculated in step 2 this time is set in "oldlu [0]" as the latest data, that the preceding negative data "oldlu [0]" of LU which is calculated as negative in the latest preceding operation is set in "oldlu [1]", that the preceding negative data LU previously set in the preceding "oldlu [1]" is set in "oldlu [2]", and that the preceding negative data LU preciously set in the preceding "oldlu [2]" is set in "oldlu [3]" so that the four data of discriminating value are memorized as the latest negative data of LU.

In the next step 5, to sample the minimum value from the four negative LU data, the counter i is reset to zero so as to compare the four data one after another. Also, at the same time, the value LU calculated this time is temporarily set as the minimum value "min".

In step 6, it is discriminated whether the counter i is less than 4 or not. If the counter i is less than 4, the flow goes on to step 7. In step 7, the data "oldlu [i]" is compared with the data "min". If the data "oldlu [i]" is larger than the data "min", the flow goes on to step 8 wherein the data of LU now being set in "oldlu [i]" is renewed by the data "min". Also, irrespective of the result of discrimination in step 7, the counter i is raised up by 1 in step 9.

More precisely, first, the latest data of LU is set as the minimum data "min", then the data "min" is compared with the data "oldlu [0]". According to the result of the comparison ,the smaller data is set as "min". The data "min" is further compared with the data "oldlu [1]", "oldlu [2]", and "oldlu [3]", one by one so that the smallest value is sampled from the four negative data of LU.

In such a way mentioned above, the minimum data "min" is sampled from four previous negative data of LU. After that, in step 10, the change ratio of the discriminating value LU is determined from the absolute value of the deviation between the latest data of LU calculated in step 2 this time and the previous data of LUold calculated in precious step 2 of the preceding operation of the program executed 180° CA before. The absolute value of the change ratio is set in "Dlu".

When a misfire occurs, the deviation of LU between cylinders becomes large, as illustrated in Fig. 6. Therefore, in the event that the data of "Dlu" is smaller than a predetermined value, that is, the value LU does not substantially change, the change of mean effective pressure can be presumed as being caused by unevenness of combustion between the cylinders rather than being resulted from the misfire in the cylinder. On the other hand, in the event that the data of "Dlu" is larger than the predetermined value, the change of the mean effective pressure can be presumed as being caused from the occurrence of misfire in the cylinder.

In the subsequent step 11, the data of LU calculated in step 2 this time is set in "LUold" for the sake of calculation in the step 10 next time in the subsequent operation of the program.

In the next step 12, the data of "Dlu" which is the difference of the value LU between the cylinders is corrected with the use of the engine revolution velocity. More precisely, if the data of "Dlu" is larger than the predetermined value, it is assumed that the mean effective pressure in the cylinder is changed due to the occurrence of misfire in the cylinder. However, the mode of the pressure change or pressure difference of the misfired cylinder in comparison to the normal cylinders differs according to the engine revolution velocity, as can be seen from Fig. 6. That is, the difference of the data LU between the cylinders becomes large according as the engine revolution speed is lowered. Therefore, in step 12 the data of "Dlu" is compensated in response to the engine revolution speed so that "Dlu" is increased according as the engine revolution speed becomes high, whereby the data of "Dlu" can be used irrespective of the revolution speed of the engine. The data of "Dlu" is corrected in such a way that the square of the engine revolution speed (rpm) is multiplied by the value of "Dlu" and divided by a predetermined value to match the figure with the order of "Dlu". By correcting the data of "Dlu" in response to the engine revolution speed as mentioned above, it becomes unnecessary to prepare a map of coefficient X for every revolution speed of the engine, which enables to save the capacity of ROM.

In the next step 13, the coefficient X for setting the slice level SL by correcting the minimum data "min" is retrieved from the map on the basis of the data of "Dlu" which is corrected in response to the revolution speed of the engine in the preceding step 12 and represents the difference of the value LU between the cylinders.

When the data of "Dlu" is larger than a predetermined value, the coefficient X is set as a value which is smaller than 1 according to the increased amount of "Dlu". On the other hand, when the data of "Dlu" is smaller than the predetermined value, the coefficient X is set as a large value according as "Dlu" becomes small. In accordance with such an arrangement, when the "Dlu" is smaller than the predetermined value and the value LU does not differ very much between cylinders, which represents the state that the engine is operated without the occurrence of misfire, it becomes possible to avoid error discrimination of misfire due to the value LU being larger than the slice level SL, by setting the slice level as a value which is smaller than the minimum value "min". On the other hand, when the "Dlu" is larger than the predetermined value and the value LU differs very much between cylinders, which represents the state of occurrence of misfire, the slice level is set as a value which is larger than the minimum value "min" and close to zero, so that the misfire is detected by discriminating that the value LU is less than the slice level SL.

In step 13, as mentioned above, the coefficient X is set for determining the slice level SL by multiplying the minimum value "min" by the coefficient X. After the step 13, the flow goes to step 14 wherein the slice level SL is determined by multiplying the coefficient X by "min" which is the smallest value obtained from the four preceding negative data of LU sampled in the process of steps 5 to 9. The slice level SL determined in this step is compared with the data of LU in the step 15 described later, so that the misfired cylinder is discriminated by detecting the cylinder in which the mean effective pressure Pi is reduced.

As mentioned above, the slice level SL is determined on the basis of the change ratio "Dlu" of the discriminating value LU and the data of "min". Therefore, as illustrated in Fig. 4, even when the conditions of revolution speed and engine load are the same, the slice level SL is changed in response to the value LU. Accordingly, it becomes possible to avoid error discrimination of misfire by setting the slice level SL well below the value Lu in the state of normal engine operation without the occurrence of misfire. Also, it becomes possible to reliably detect the misfired cylinder by changing the value of the slice level SL to a value which is larger than the value of "min" in response to the level of LU when the misfire occurs. Besides, the variable setting of the slice level SL can be automated only by carrying out the matching of the coefficient X, it becomes possible to simplify the matching process of the slice level SL and save the memory capacity of ROM.

In step 15, the slice level SL determined in step 14 is compared with the value LU calculated this time so as to discriminate whether the value LU is smaller than the slice level SL or not.

When the value LU is discriminated as being below the slice level SL, a flag is discriminated in step 16. The flag is arranged in such a way that when the value LU is negative, 1 is set therein in the step 27 described later, whereas when the value Lu is zero or more, zero is set therein in the step 28. Therefore, when the flag is discriminated as zero in step 16, the value LU is supposed to be discriminated as being below the slice level SL in the initial time when the value LU becomes negative. In this case, on the basis of the latest value LU of this time, the cylinder which shows the decrease of mean effective pressure is presumed to be the misfired cylinder and the flow goes on to step 17.

In step 17, depending on the cylinder which the TDC of right before the compression TDC belongs to, a cylinder in combustion stroke which influenced the TDC period sampled most lately is specified and the specified cylinder is determined as the misfired cylinder on the basis of the value LU of this time.

More precisely, for instance, when the compression TDC of this time belongs to #2 cylinder, and if the ignition order is such that #1 → #3 → #4 → #2, the cylinder of right before the compression TDC is #4 cylinder in which the combustion stroke takes place. The combustion state of #4 cylinder influences the period which is measured and used as the base of calculation of the discriminating value LU. Therefore, the occurrence of misfire in the #4 cylinder is detected on the basis of the value LU discriminated as below the slice level SL this time. Then the flow moves on to step 18 wherein the counter for counting the misfire occurrence number is counted up so that the count number C4 is increased by 1.

Similarly, it is assumed that the misfire takes place in the cylinder which is in the combustion stroke at the time right before the compression stroke of the cylinder which the compression TDC of this time belongs to. Under the above mentioned assumption, the misfire detection numbers C1 to C3 are upcounted for every cylinder, respectively (steps 19 to 21).

On the other hand, when the flag is discriminated as being set as 1, the flag represents the state wherein the value Lu is maintained to be negative, as illustrated in Fig. 5. In this case, it is correct to specify the misfired cylinder on the basis of the value LU which firstly becomes negative. Therefore, the misfired cylinder is specified as the one which is in the combustion stroke at the time two times before the combustion stroke of the cylinder specified as the latest compression TDC step 22.

That is, when the #4 cylinder is assumed to be the cylinder of the compression TDC of this time, the cylinder in the combustion stroke at the time right before the compression TDC of the #4 cylinder is the #3 cylinder, and the cylinder of one time before the compression TDC is the #1 cylinder. Therefore, when the combustion cylinder is discriminated to be the #4 cylinder in step 22, the #1 cylinder is presumed to be misfired and the flow moves on to step 23 wherein the count register C1 for upcounting the misfire detection number of the #1 cylinder is upcounted by one increment.

Similarly, when the combustion cylinder is discriminated as the #2, #1, or #3 cylinder, the #3, #4, or #2 cylinder is presumed to be misfired and the respective misfire detection number is upcounted (steps 24 to 26).

In the event that the misfired cylinder is specified and the misfire number of the cylinder is upcounted as mentioned above, the flag is set as being 1 in step 27. Also, in the event that the value LU is discriminated as being negative and above the slice level SL in step 15, the flag is also set as being 1 in Step 27.

Also, when the value LU is discriminated as being more than zero in step 3, the flow moves on to step 28 wherein the flag is set as being zero.

After the flag is set in step 27 or 28, the flow moves on to step 29 wherein the count number "cnt" for counting the execution number of the program is discriminated whether the number "cnt" comes up to a predetermined number, for example 1000, or not. In this case, when the count number "cnt" is less than the predetermined number, the number "cnt" is upcounted by 1 in step 30 and the program is ended.

Whereas, when the number "cnt" is more than the predetermined number, the number "cnt" is reset to zero in step 31. After that, the misfire occurrence is displayed with respect to each cylinder on the basis of the misfire occurrence ratio of each cylinder in each of steps 32 to 39.

In step 32, misfire of the #1 cylinder is alarmed in the following way. The data of C1 in which the misfire detection number of the #1 cylinder is registered is compared with a predetermined number, for example 40. That is, the number of the misfire detection of the #1 cylinder is discriminated whether or not the misfire is detected more than a predetermined times during a predetermined period from the count start to the time when the count number "cnt" comes up to the predetermined number. When the misfire number is more than the predetermined value, the flow moves on to step 33 wherein the misfire occurrence of the #1 cylinder is displayed and alarmed on the dashboard of the vehicle which mounts the engine 1.

Similarly, the data of C2 to C4 in which the misfire detection numbers of the #2 to #4 cylinders are registered, respectively, are compared with a predetermined number. Thereby, the misfire frequency of each cylinder is discriminated whether the frequency is more than a predetermined value or not. If there is a cylinder in which the misfire occurs more than the predetermined times, the cylinder is displayed and alarmed in the same way as mentioned above with respect to the #1 cylinder (steps 34 to 39).

After the misfire frequency of each cylinder is discriminated by comparing the misfire count number data C1 to C4 with the predetermined number, respectively, the data C1 to C4 are reset to zero. After that, a new data of misfire detection number for each cylinder is set in each of C1 to C4. The new data is detected during the predetermined period until the count number "cnt" comes up to a predetermined number.

As mentioned above, when the misfire frequency of a cylinder becomes more than a predetermined value, the cylinder is displayed and alarmed. However, it is to be noted that in addition to such a display and alarm function, a fail-safe control may be executed such as stopping the fuel supply to the misfired cylinder.

The misfire cylinder is detected by such a way that the misfire discriminating value LU is calculated from the measurement result of revolution period which value LU is substantially corresponding to the change ratio of the mean effective pressure in each cylinder and that the misfired cylinder is discriminated on the basis of the value LU. However, the roughness of the engine revolution is caused from not only misfire but also torsional vibration of the vehicle in the transitional driving conditions. Therefore, irrespective of adjustment of the slice level for the discriminating value LU, the misfire cylinder might be sometimes misdetected due to the torsional vibration of the vehicle.

Fig. 7 illustrates a hardware structure. An ignition reference sensor 11 outputs an ignition reference signal REF which determines an ignition control reference position for each cylinder of a four-cylinder internal combustion engine. The signal REF is a pulse signal which rises at a position 70° before the compression top dead center (BTDC 70°) of each cylinder. Also, an arrangement is made so that the ignition reference pulse for the #1 cylinder can be discriminated from those of other cylinders.

The signal REF output from the sensor 11 is input to a control unit 12 which controls the ignition of the not shown four-cylinder engine. The control unit 12 controls the ignition timing of each cylinder in such a way that each pulse is arranged to correspond to each cylinder on the basis of the reference pulse for the #1 cylinder, and that the unit detects the desired ignition angle position (more precisely, a start position of ignition current to the ignition coil and an end position of the current) on the basis of the reference position where the pulse signal rises. It is to be noted that in this particular embodiment, the ignition order is arranged in such that #1 → #3 → #4 → #2.

Also, a TDC sensor 13 is arranged to output a TDC signal which is a pulse signal which rises at a compression top dead center of each, cylinder (compression TDC). The TDC signal is also input to the control unit 12.

It is to be noted that the ignition reference sensor 11 and the TDC sensor 13 are arranged to form rectangular pulse signals as illustrated in Fig. 7 by for example forming a projection at a predetermined position on a signal disc plate which coaxially rotates with a cam shaft, dectecting the projection by an electromagnetic pickup so as to obtain an induced electromotive pulse signal at an interval of detecting the projection, and processing the pulse signal by a zero-cross comparator.

Further, a throttle sensor 14 is arranged to detect, with the use of a potentiometer, the opening (TVO) of the throttle valve which controls the intake air amount to the engine cooperating with a not shown accel pedal. The TVO detection signal output from the sensor 14 is also input to the control unit 12.

The control unit 12 functions not only to control the ignition timing of each cylinder but also to detect the misfired cylinder on the basis of the detection signals from the above mentioned sensors and code the identification number of the misfired cylinder so as to display the misfired cylinder on a display device 15 disposed on the dashboard or around the driving seat of the vehicle, for example, as described later.

The function of controlling the misfire detection by the control unit 12 is described below with reference to the flow charts of Figs. 8 to 10.

The constituent means, such as the misfire discriminating value calculation means, the misfire cylinder discrimination means, and the misfire discrimination prohibiting means in the transitional driving state, are provided as software means as represented in the flow charts of Figs. 8 to 10. Also, the revolution period measuring means is constituted from the TDC sensor 13 and the control unit 12. Further, the transitional driving state detection means is constituted from the throttle sensor 14 and the control unit 12.

First, the program of the flow chart illustrated in Fig. 8 is explained below.

The program is executed at every minute time interval (for example 10ms). In step 51, the throttle valve opening signal (TVO signal) output from the throttle sensor 14 is input to the unit. In the next step 52, the unit calculates the opening change ratio ΔTVO used as the change ratio of execution period of this program routine.

After that, in step 53, the unit discriminates whether the ratio ΔTVO calculated in step 52 is almost zero or not.

When the ratio ΔTVO is discriminated as not zero, that is, when the engine is in the sate of transitional driving condition, the flow moves on to step 54 wherein a predetermined number (for example 300) is set in the timer (tmr).

On the other hand, when the ratio ΔTVO is discriminated as almost zero in step 53, which means that the engine is in the normal driving condition state, the flow moves on to step 55 wherein the unit discriminates whether the timer (tmr) is zero or not. The timer is set, as mentioned before, with a predetermined number in the transitional driving condition wherein the throttle valve opening (TVO) is changing. Therefore, in the early time after shifting from the transitional driving state to the normal driving state, the timer is not set as being zero. When the timer is discriminated as not being zero in step 55, the flow moves on to step 56 wherein the timer is downcounted by 1 decrement.

More precisely, the timer is being set with a predetermined number in the state of transitional driving condition which is discriminated on the basis of the throttle valve opening. Also, when the engine driving state is shifted from the transitional state to the normal state, the set number of the timer is decreased by 1 decrement each time the program is executed. An arrangement is made so that the set number of the timer does not become zero within a predetermined time (period) depending on the initial set number starting from the timing of shifting to the normal driving state. Therefore, by discriminating, whether the timer number is zero or not, it is possible to discriminate whether or not the predetermined time has passed since the driving state is shifted from the transitional state to the normal state.

Fig. 9 illustrates a flow chart of the program for setting the counter (Icnt) for specifying the misfired cylinder in the misfire cylinder detection operation which is executed at each TDC as described later. This routine of the program is executed each time when the ignition reference sensor 11 outputs the reference signal REF at an interval of BTDC 70°.

The signal REF is arranged so that the pulse for the ignition reference of the #1 cylinder can be discriminated from the other pulses, as mentioned before, so as to arranged each pulse to correspond to each cylinder. In accordance with the program of the flow chart of Fig. 9, in steps 61, 63, 65, and 67, the unit discriminates for which cylinder the signal REF of this time is to be used as the ignition timing reference. The identification number of the discriminated cylinder is set in the counter (Icnt) in steps 62, 64, 66, and 68.

Fig. 10 illustrates a flow chart of a misfire discrimination program. This program is executed at every rising point of the TDC pulse signal which is output from the TDC sensor 13 and rises at each compression TDC position of each cylinder. First, in step 71, the unit discriminates the value of the counter (Icnt) in which the identification number of the cylinder is set in response to the signal REF in accordance with the flow chart of Fig. 9. After that, in steps 72 to 75, on the basis of the result of cylinder discrimination process in step 71, the unit calculates the misfire cylinder discriminating value LUn for detecting the occurrence of misfire for each cylinder.

In step 71, for example, when the #3 cylinder is discriminated to be set in the counter (Icnt), the compression TDC of the #3 cylinder is used as the trigger for executing the program this time, as illustrated in Fig. 11. As described later in detail, the occurrence of misfire is detected on the basis of the change or roughness of the crank angular velocity in every cycle. The latest TDC period is influenced from the inner pressure (combustion pressure) of the #1 cylinder. Therefore, the occurrence of misfire in the #1 cylinder is discriminated this time. Accordingly, in this case, to clarify that the data of LU calculated on the basis of the TDC period is to be used for discriminating the misfire of the #1 cylinder, the discriminating value is represented as $LU_{(1)}$. That is, when only the value LU which is calculated from the TDC period is specified, it is not clear which cylinder is misfired. Therefore, by adding the suffix to the value LU to indicate the cylinder to be detected, it becomes possible to directly discriminate which cylinder is misfired from the result of calculation.

The value LU is calculated as follows. First, the rising period (180°) of the TDC pulse signal output from the TDC sensor 13 is measured. Of the measurement results, at least the data of 360° CA before (one turn, i.e., 1/2 cycle before) and the data of 720° CA before (two turns, i.e., one cycle before) are memorized as the value of "half" and "old", respectively. Also, the latest data of 180° period is set in "new". These data of period are substituted in the following equation to calculate the misfire discrimination value LU.

$$LU = \frac{(half - old) - (new - half)}{old}$$

The value LU represents the difference of the illustrated mean effective pressure, that is, the change or roughness of crank angular velocity in every one cycle. The value LU is around zero when the misfire does not occur. Then the misfire occurs and the illustrated mean effective pressure is changed, the difference becomes larger according as the revolution speed becomes lower and the engine load becomes higher. The amount of the pressure fall due to the occurrence of misfire is represented by a negative value. Accordingly, it becomes possible to detect the occurrence of misfire by discriminating whether the value LU is less than a predetermined negative value or not.

In response to the result of the cylinder discrimination process in step 71 as mentioned above, the unit calculates the discriminating value LUn for the cylinder to be discriminated this time (steps 72 to 75). After that, in step 76, the unit discriminates whether the change ratio ΔTVO of the throttle valve opening is approximately zero or not.

When the ratio ΔTVO is discriminated as being almost zero, the flow moves on to step 77 wherein the unit discriminates whether the timer (tmr) is set as being zero according to the flow chart of Fig. 8 or not.

When the timer is discriminated as being zero in step 77, the engine is being in the state of stable normal driving condition since the throttle valve opening TVO is almost constant and the predetermined time has passed after the time when the driving state is shifted from the transitional state to the normal state. Therefore, only when the timer is discriminated as being zero as mentioned above, the flow moves on to step 78 wherein the misfire cylinder discrimination process is carried out.

In the transitional driving state, torsional vibration of the vehicle is generated, which strongly influences the crank angular velocity (TDC period), which might cause the error detection of the misfired cylinder. Therefore the misfire cylinder detecting process is prohibited from being executed in the transitional driving state wherein the torsional vibration of the vehicle is generated. The influence from the torsional vibration on the engine revolution continues for a while after the throttle valve opening (TVO) becomes constant (see Fig. 12). The timer (tmr) measures such a time period wherein the vibration is still influential after the driving state is shifted from the transitional state to the normal state so that the misfire cylinder detection process is executed only after the engine revolution roughness due to the transitional driving condition is negligibly attenuated.

Therefore, when the change ratio ΔTVO is discriminated as being not zero in step 76 and when the timer is discriminated as being not zero in step 77, the program is ended without executing the misfire cylinder detecting process so as to avoid the error detection of the misfired cylinder due to the revolution roughness caused by the transitional driving conditions.

In step 78, for example, with respect to an electronically controlled fuel injection device, a basic fuel injection amount Tp is determined on the basis of the intake air amount or pressure of the engine and the engine revolution speed. The slice level SL for discriminating the misfire is determined on the basis of the data of engine load which is represented by the basic fuel injection amount Tp and the engine revolution speed N. Due to such an arrangement in which the slice level SL is variably determined on the basis of the engine load and the engine revolution speed N, it becomes possible to change the value LUn in response to the change of the engine load and the revolution speed so that the misfire detection accuracy is raised.

It is to be noted that the slice level SL may be adjusted in response to the value of LU.

In the next step 79, one of the discriminating values $LU_{(1)}$ to $LU_{(4)}$ calculated in one of steps 72 to 75 is compared with the slice level SL determined in step 78. When the discriminating value is below the slice level SL, the cylinder of the suffix number of LU, that is, the cylinder ignited prior to the cylinder which is at the top dead center this time, is determined as the one which is misfired. The identification number of this misfired cylinder is displayed in the display device 15 (step 80). Thereby the driver is alarmed of the occurrence of misfire and noticed of the necessity of examination.

It is to be noted that, as illustrated in Fig. 5, when all of the continuous discriminating values $LU_{(1)}$ to $LU_{(4)}$ are negative and one of them is below the slice level SL, it is desirable, for the sake of increasing the detection reliability, to arrange so that the cylinder which firstly shows the negative value be discriminated as being misfires.

As mentioned above, the misfire cylinder detecting operation is prohibited during the time period when the throttle valve opening TVO is being changed and until a predetermined time passes after the opening TVO becomes substantially constant. However, instead of the above mentioned arrangement, the misfire detection operation may be prohibited until the engine is rotated by a predetermined turns after the valve opening TVO becomes constant.

Also, the misfire discriminating value LU is calculated on the basis of the TDC period and the misfire is detected with the use of the value LU. With regard to the misfire cylinder detecting apparatus which detects the misfire from the change or roughness of crank angular velocity in every cycle, it becomes possible to increase the reliability of misfire detection by prohibiting the misfire discrimination routine in the transitional driving state of engine as described above.

The value LU is calculated on the basis of the TDC period. However, the angle range for measuring the period may be set as other than the TDC period, especially for further raising the detection accuracy or when the misfire detection by measuring the TDC period can not be operated. An embodiment of the invention described below is arranged such that the period of other than the TDC period is used for determining the misfire discrimination value LU.

The hardware structure of the embodiment of the present invention is the same as that in Fig. 2.

The control unit 9 detects the misfired cylinder from the four cylinders in accordance with the flow chart of the program illustrated in Fig. 13 (Figs. 13A, 13B, 13C). The identification number of the misfired cylinder is displayed, for example, around the driver's seat of the vehicle.

It is to be noted that Fig. 13 illustrates actually two programs which have an execution timing different from each other and execute the same routine from an intermediate portion of the programs. Therefore, in actual prosecution of the flow chart, one of the two programs is executed to detect the misfired cylinder.

First, the misfire cylinder detecting function on the basis of compression TDC period of each cylinder is described below. The program is interruptingly started at the timing when the input of the trigger-1 is received, that is, when the compression TDC position at the rising point of the TDC pulse is detected.

First, in step 91, a free-run counter which is upcounted at every minute time interval is set to have a count number T. From the number T is subtracted the number MT which was the set number of the free-run counter in the process for the preceding execution of the program, that is the compression TDC of last time. The result of the subtraction represents the upcounted increment Tm in a period of an interval between the timings of the execution of the program. The program is executed on the basis of the compression TDC period as mentioned before. Therefore, the number Tm represents the compression TDC period. This arrangement constitutes the revolution period measuring means which in this particular embodiment is arranged in such a way that a predetermined crank angle position is set as the compression TDC.

In the next step 92, the set value T of this time is set in MT as a renewal set value so as to use, in the subsequent execution of this program next time, the data of MT as the data of last time.

In step 93, the compression TDC period data of the latest value Tmϕ, the value Tm1 of one time before, the value Tm2 of 2 times before, and the value Tm3 of three times before are renewed. More precisely, the data of previous Tmϕ which was the latest data in the program execution last time is set as the data of Tm1 of this time representing the data of one time before. Similarly, the previous data of Tm1 and Tm2 of last time are set as the data of Tm2 and Tm3 of this time, respectively. The data of Tm calculated in step 91 in the program execution this time is set as the latest data Tmϕ of this time.

In step 94, the average of renewed TDC period data is calculated according to the formula and set in "tm".

$$tm \leftarrow \frac{Tm\phi + Tm1 + Tm2 + Tm3}{4}$$

In the above formula, Tmϕ + Tm1 + Tm2 + Tm3 represents the period data of two turns (720° CA) of the engine 1 since each of the four factors of the formula represents the period data of 180° CA, respectively. The average "tm" of the formula is the 180° CA period data in appearance. However, since fluctuations of the factors Tmϕ, Tm1, Tm2, Tm3 are cancelled in the formula, the data of "tm" can be used as the data representing the period of two turns of the engine.

After that, in step 95, the data of "tm" obtained as mentioned above is set as the latest data of "tmϕ". Also, the previously latest data tmϕ of last time is set as the data of "tm1" of one time before (180° CA before) this time. The data tm1 of last time is set as the data of "tm2" of two times before (360° CA before) this time. The data tm2 of last time is set as the data of "tm3" of three times before (540° CA before) this time. The data tm3 of last time is set as the data of "tm4" of four times before (720° CA before) this time.

The data "tm" of two-turn period is calculated for every TDC of each cylinder and memorized in each of "tmϕ" to "tm4" in time series. After that , in step 111 which functions as the misfire discriminating value calculation means, the discriminating value LU is calculated on the basis of the period measurement result mentioned above according to the following formula.

$$LU \leftarrow \frac{(tm2 - tm4) - (tm\phi - tm2)}{tm4}$$

In the above calculation formula, "tmϕ" represents the latest data of two-turn period, "tm2" represents the data of two-turn period sampled one turn before (1/2 cycle before), and "tm4" represents the data of two-turn period sampled two turns before (one cycle before). As mentioned before, the value LU obtained from the two-turn period is approximately corresponding to the changing amount of mean effective pressure in each cylinder.

With regard to the four-cylinder engine, the crank angular velocity in the TDC period (180° CA period) is largely changed caused by misfire so that the value LU is clearly changed depending on the occurrence of misfire, which enables to detect the misfire on the basis of the compression TDC period (180° CA period). Therefore, it is unnecessary to measure the two-turn period (720° CA period) as mentioned above in the event of detecting misfire in four-cylinder engine. However, with regard to for example eight-cylinder engine, the engine driving state is almost kept unchanged irrespective of the occurrence of misfire in the period of compression TDC (90° CA period) as illustrated in Fig. 15. Therefore, misfire can not be detected by measuring the compression TDC period (90° CA period) of the eight-cylinder engine. Accordingly, it becomes necessary to measure the 360° CA period or the 720° CA period.

For example, with regard to the eight-cylinder engine, when the 360° CA period is to be measured, the period may be measured by measuring one-turn period of the engine from a compression TDC of each cylinder. Or otherwise, the 360° CA period may be measured by such a way that the compression TDC period (90° CA period) is measured and memorized in time series and after that the memorized data of 90° CA period are summed to get the data of 360° CA period. In this way, the 360° CA period or the 720° CA period can be measured and with the use of the measured data the occurrence of misfire can be reliably detected in the eight-cylinder engine.

Therefore, the above mentioned period measuring arrangement is very useful for the eight-cylinder engine and other engines having a structure in which the misfire can not be detected from the discriminating value LU calculated on the basis of the compression TDC period, since, for example, by experimenting the measurement of period changing the angle measured from the TDC point to two times, three times or four times of the TDC period, and calculating the value LU on the basis of the data of the experiment, it becomes possible to accurately detect the misfire on the basis of the data of period measurement.

Next, the other program for detecting the misfire cylinder is described below. This program is executed at a timing different from the above mentioned embodiment which is executed at every TDC timing. This program is different from the above mentioned embodiment in the steps before step 111 for calculating the value LU in the flow chart of Fig. 13. The steps after the step 111 of this program are substantially the same as those of the embodiment mentioned above, except the execution timing.

That is, the program described below is executed each time ATDC 140° is detected, instead of being executed at the timing when TDC is detected as the afore-mentioned program. It is to be noted that the execution timing ATDC 140° represents the timing right after measuring the period of ATDC 45° to ATDC 135°. The timing is not limited to ATDC 140°. The timing may be within a predetermined time after ATDC 135° which is detected by counting 3° CA pulses from the TDC pulse signal.

When ATDC 140° is detected, the program is interruptingly executed. First, in step 101, the latest period data of ATDC 45° to ATDC 135° which are measured by the timer 3 is input.

After that, in step 102, the data input in step 101 at every ATDC 140° are registered in time series in tmϕ, tm1, tm2, tm3 and tm4, respectively, which memorize the latest data to the data of 4 times before, respectively. More precisely, the previous data of tmϕ, tm1, tm2, tm3 of last time are set as the renewal data of tm1, tm2, tm3, tm4 of this time, respectively. Also, the latest data input in the step 101 is set in tmϕ of this time.

In the next step 111, the discriminating value LU is calculated on the basis of the period data of ATDC 45° to ATDC 135° renewed at every ATDC 140°. The value LU is calculated with the use of the latest period data tmϕ, the data tm2 of 1/2 cycle (one turn)before, and the data tm4 of one cycle (two turns) before. Each data is the period of ATDC 45° to ATDC 135°.

It is to be noted that, with regard to the four-cylinder engine, it is possible to detect the misfired cylinder by measuring the compression TDC period, as can be seen from Fig. 14 and Fig. 15. The period of ATDC 45° to ATDC 135° mentioned above corresponds to the angle range of the four-cylinder engine where the combustion state strongly influences the crank rotation as can be seen from Fig. 14. Therefore, by measuring the period of ATDC 45° to ATDC 135° and calculating the value LU on the basis of the measured period data, it becomes possible to further clearly change the value LU depending on the occurrence of misfire, as can be seen from Fig. 14, than in the case wherein the LU is calculated from the compression TDC. Thereby, it becomes possible to increase the reliability of misfire cylinder detection especially in the low load driving condition wherein the value LU is not largely changed by the occurrence of misfire (see Fig. 6).

As mentioned above, the value LU is calculated either on the basis of two-turn period (720° CA period) measured at every compression TDC or on the basis of the period of ATDC 45° to ATDC 135° measured at every ATDC 140°. After that, the misfired cylinder is detected with the use of the value LU in the steps 112 and after 112. It is to be noted that the portion of steps 112 to 126 corresponds to the misfire cylinder discrimination means of the present invention.

In step 112, it is discriminated whether the value LU calculated in step 111 this time is negative or not. If the value LU is negative, which means that the mean effective pressure is decreasing, the flow moves on to step 114. Whereas if the value LU is not negative, the flow moves on to step 113 wherein flag is set to be zero.

In step 114, the value LU is compared with the slice level SL which is determined in advance in response to the driving conditions such as engine load and revolutional speed. It is discriminated whether the value LU is less than the slice level SL or not in this step 114.

When the value LU is discriminated as being less than the slice level SL, the flag is then discriminated in step 115. The flag is set to be 1 in the step 126 described later when the value LU is negative. Therefore, when the flag is discriminated as being zero in step 115, this means that the value LU is below the slice level SL at the time when the value LU firstly becomes negative. In this case, it is presumed that the misfired cylinder is the one which shows the decrease of mean effective pressure determined from the value LU. After that, the flow moves on to step 116.

In step 116, in the event that the program is executed on the basis of the TDC period, the combustion cylinder is determined from the cylinder which is at the compression TDC this time. For example, when the #2 cylinder is at the compression TDC this time, and if the ignition order is such that #1 → #3 → #4 → #2, the #4 cylinder is in the combustion state right before the compression TDC of the #2 cylinder. The value LU is calculated on the basis of the measured TDC period of the #2 cylinder which is influenced from the combustion of the #4 cylinder. Therefore, the #4 cylinder is presumed to be the misfired cylinder determined from the value LU which is discriminated as below the slice level SL this time. After that, the flow moves on to step 117 wherein the count number C4 of misfire occurrence in the #4 cylinder is increased by 1 increment. Similarly, the other cylinders are discriminated whether they are misfired or not in the same way mentioned above and the number of misfire occurrence of each cylinder is upcounted in steps 118 to 120.

On the other hand, when the flag is discriminated as being set to be 1 in step 115, which means that the value LU is maintained negative, as can be seen from Fig. 5, in this case the misfired cylinder is presumed to be the one which is in the combustion state two times before the combustion state of the cylinder at the compression TDC in step 121 this time, since the misfired cylinder is correctly specified from the value LU which first becomes negative.

More precisely, when the #4 cylinder is at the compression TDC this time, the combustion cylinder right before the TDC cylinder is the #3 cylinder and the cylinder two times before the TDC cylinder is #1 cylinder. Therefore, when the #4 cylinder is discriminated as the combustion cylinder in step 121, it is presumed that the #1 cylinder is misfired and count number C1 of the misfire occurrence of the #1 cylinder is increased by 1 increment in step 122. Similarly, when the combustion cylinder is #2, #1 or #3 cylinder, the #3, #4 or #2 cylinder is presumed to be misfired and the count number of the misfire occurrence of the cylinder is upcounted in steps 123 to 125.

On the other hand, when the period is sampled at the timing of ATDC 140°, the cylinder which is discriminated in steps 116 and 121 is determined to be the one which becomes to be at the compression TDC next time.

When the misfired cylinder is specified and the number of misfire occurrence thereof is upcounted, as mentioned above, as well as when the value LU is discriminated as being negative and below the slice level SL in step 114, the flag is set as to be 1 in step 126.

When the flag is set in step 113 or 126, the flow moves on to step 127. In step 127, it is discriminated whether the count number "cnt" of the program execution reaches a predetermined number (for example 1000) or not. When the count number "cnt" is not upcounted to the predetermined number, the flow moves on to step 128 wherein the count number "cnt" is increased by 1 increment and the program is ended. Whereas, when the count number "cnt" is over the predetermined number, the count number "cnt" is reset to zero in step 129. After that, information of the occurrence of misfire is displayed for each cylinder on the basis of the misfire occurrence ratio of each cylinder in steps 130 to 137.

In step 130, the count value C1 of the misfire detection number of the #1 cylinder is compared with a predetermined number (for example 40). When the number of misfire detection of the #1 cylinder exceeds the predetermined number before the count number "cnt" of the program execution is upcounted to a predetermined number, the flow moves on to step 131 wherein information on the misfire occurrence of the #1 cylinder is displayed on the dashboard of the vehicle on which the engine 1 is mounted so as to warn the driver of misfire.

Similarly, with respect to each of the remaining cylinders #2 to #4, the misfire detection number memorized in the corresponding register C2 to C4 is compared with the predetermined number so as to discriminate whether the misfire frequency of each cylinder is more than a predetermined value or not. When the misfire frequency is more than the predetermined value, information on the misfire of that cylinder is displayed in the same way as described before (steps 132 to 137).

After comparing the misfire count values C1 to C4 with the predetermined number, respectively, to discriminate the misfire occurrence frequency of each cylinder, the count values C1 to C4 are reset to zero in step 138. After that, the misfire detection number is again counted during the time until the count number "cnt" is upcounted to reach the predetermined number. The new data of misfire detection number for each cylinder is set in each of the registers C1 to C4.

It is to be noted that in the embodiment, mentioned above, the slice level SL may be adjusted in response to the misfire discriminating value LU. Also, in the embodiment, the misfire cylinder detection process may be prohibited in the transitional driving state.

## Claims

**1.** Method for detecting a misfired cylinder of a multi-cylinder internal combustion engine, comprising the steps of:
- generating a crank angle signal;
- measuring for each cylinder and for each half engine cycle the period during which the crankshaft rotates through a predetermined angular range based on said crank angle signal;
- calculating (S111) the difference between an actually measured period and the period measured one half engine cycle earlier;
- deriving (S111) a misfire discrimination value (LU) from the change amount between the actual difference and the difference calculated one half engine cycle earlier;
- discriminating (S112-S129) a misfired cylinder if the misfire discrimination value (LU) exceeds a threshold,

characterized in

that said predetermined angular range is smaller than that between the upper dead points of the compression stroke of consecutive cylinders and comprises the range where the combustion state strongly influences the rotational speed of the crankshaft.

**2.** Method as claimed in claim 1, characterized in

that the angular range is between 45° after the top dead center of the compression stroke and 135° after the top dead center of the compression stroke.

**3.** Method as claimed in claim 1 or 2, characterized in that the misfire discrimination value (LU) is calculated on the basis of the following formula:

$$LU = \frac{(Told2-Told4)-(Tnew-Told2)}{Ti}$$

wherein the Tnew is the actually measured period, Told2 is the period measured one half cycle before the actual one, Told4 is the period measured one cycle before the actual one and Ti is either of Tnew or Told2 or Told4.

**4.** Method as claimed in one of the claims 1 to 3, characterized by the step of detecting (S76) a transitional driving state of the engine, said transitional driving state comprising an acceleration state or a deceleration state, wherein discrimination of a misfired cylinder is prohibited during the transitional driving state and within a predetermined time after the lapse of the transitional driving state.

**5.** Method as claimed in any of the claims 1 to 4, characterized in that said threshold is variably set by calculating (S3-S11) a change ratio of said misfire discrimination value (LU) and adjusting (S13,S14) said threshold in response to said change ratio.

**6.** Method as claimed in any of the claims 1 to 4, characterized in
that the engine revolution speed is calculated based on the crank angle signal; and
that said threshold is variably set by calculating a change ratio of said misfire discrimination value and adjusting (S12,S13,S14) said threshold in response to said change ratio and the square value of the engine revolution speed.

**7.** Apparatus for detecting a misfired cylinder of a multi-cylinder internal combustion engine, comprising:
- means for generating a crank angle signal;
- measuring means for measuring for each cylinder and for each half engine cycle the period during which the crankshaft rotates through a predetermined angular range based on said crank angle signal;
- calculating means for calculating (S111) the difference between an actually measured period and the period measured one half engine cycle earlier;
- deriving means for deriving (S111) a misfire discrimination value (LU) from the change amount between the actual difference and the difference calculated one half engine cycle earlier;
- discriminating means for discriminating a misfired cylinder if the misfire discrimination value (LU) exceeds a threshold,

characterized in
that said predetermined angular range is smaller than that between the upper dead points of the compression stroke of consecutive cylinders and comprises the range where the combustion state strongly influences the rotational speed of the crankshaft.

**8.** Apparatus as claimed in claim 7, characterized in that the angular range is between 45° after the top dead center of the compression stroke and 135° after the top dead center of the compression stroke.

**9.** Apparatus as claimed in claim 7 or 8, characterized in that said misfire discrimination value calculation means calculates the misfire discrimination value (LU) on the basis of the following formula:

$$LU = \frac{(Told2-Told4)-(Tnew-Told2)}{Ti}$$

wherein the Tnew is the actually measured period, Told2 is the period measured one half cycle before the actual one, Told4 is the period measured one cycle before the actual one and Ti is either of Tnew or Told2 or Told4.

**10.** Apparatus as claimed in one of the claims 7 to 9, characterized by
transitional driving state detecting means for detecting a transitional driving state of the engine, said transitional driving state comprising an acceleration state or a deceleration state, said transitional driving state detecting means prohibiting discrimination of a misfired cylinder during the transitional driving state and within a predetermined time after the lapse of the transitional driving state.

**11.** Apparatus as claimed in any of the claims 7 to 10, characterized by
threshold varying and setting means for variably setting said threshold by calculating a change ratio of said misfire discrimination value (LU) and adjusting said threshold in response to said change ratio.

**12.** Apparatus as claimed in any of the claims 7 to 10, characterized by
means for calculating the engine revolution speed based on the crank angle signal; and
threshold varying and setting means for variably settting the threshold by calculating a change ratio of said misfire discrimination value and adjusting said threshold in response to said change ratio and the square value of the engine revolution speed.

**Patentansprüche**

**1.** Verfahren zum Erfassen eines fehlgezündeten Zylinders eines Motors mit innerer Verbrennung mit mehreren Zylindern, das folgende Schritte aufweist:
- Erzeugen eines Kurbelwinkelsignals;
- Messen der Periode für jeden Zylinder und für jeden Motor-Halbzyklus, während der sich die Kurbelwelle über einen vorbestimmten Winkelbereich dreht, basierend auf dem Kurbelwinkelsignal;
- Berechnen (S111) des Unterschieds zwischen einer tatsächlich gemessenen Periode und der einen halben Motorzyklus früher gemessenen Periode;
- Herleiten (S111) eines Fehlzündungs-Unterscheidungswerts (LU) aus dem Änderungsbetrag zwischen dem tatsächlichen Unterschied und dem einen halben Motorzyklus früher berechneten Unterschied;
- Unterscheiden (S112 - S129) für einen fehlgezündeten Zylinder, ob der Fehlzündungs-Unterscheidungswert (LU) eine Schwelle überschreitet,

dadurch gekennzeichnet,
daß der vorbestimmte Winkelbereich kleiner ist, als der zwischen den oberen Totpunkten des Kompressionshubs von aufeinanderfolgenden Zylindern, und den Bereich einschließt, in dem der Verbrennungszustand die Drehzahl der Kurbelwelle stark beeinflußt.

**2.** Verfahren nach Anspruch 1, dadurch gekennzeichnet,
daß der Winkelbereich zwischen 45° nach dem oberen Totpunkt des Kompressionshubs und 135° nach dem oberen Totpunkt des Kompressionshubs liegt.

**3.** Verfahren nach Anspruch 1 oder 2, dadurch gekennzeichnet,
daß der Fehlzündungs-Unterscheidungswert (LU) auf der Grundlage folgender Gleichung berechnet wird:

$$LU = \frac{(Talt2 - Talt4) - (Tneu - Talt2)}{Ti}$$

wobei Tneu die tatsächlich gemessene Periode ist, Talt2 die Periode ist, die einen halben Zyklus vor der aktuellen gemessen wurde, Talt4 die Periode ist, die einen Zyklus vor der aktuellen gemessen wurde und Ti entweder Tneu oder Talt2 oder Talt4 ist.

**4.** Verfahren nach einem der Ansprüche 1 bis 3, gekennzeichnet durch den Schritt des Erfassens (S76) eines Übergangsantriebszustands des Motors, wobei der Übergangsantriebszustand einen Beschleunigungszustand oder einen Verzögerungszustand einschließt, wobei eine Unterscheidung eines fehlgezündeten Zylinders während dem Übergangsantriebszustand und während einer vorbestimmten Zeit nach dem Erlöschen des Übergangsantriebszustands verhindert wird.

**5.** Verfahren nach einem beliebigen der Ansprüche 1 bis 4, dadurch gekennzeichnet, daß die Schwelle durch das Berechnen (S3 - S11) eines Änderungsverhältnisses des Fehlzündungs-Unterscheidungswerts (LU) und Einstellen (S13, S14) der Schwelle als Reaktion auf das Änderungsverhältnis variabel eingestellt wird.

**6.** Verfahren nach einem beliebigen der Ansprüche 1 bis 4, dadurch gekennzeichnet, daß die Motordrehzahl auf der Grundlage des Kurbelwinkelsignals berechnet wird; und daß die Schwelle durch Berechnen eines Änderungsverhältnisses des Fehlzündungs-Unterscheidungswertes und Einstellen (S12, S13, S14) der Schwelle als Reaktion auf das Änderungsverhältnis und den quadratischen Wert der Motordrehzahl variabel eingestellt wird.

**7.** Vorrichtung zum Erfassen eines fehlgezündeten Zylinders eines Motors mit innerer Verbrennung mit mehreren Zylindern, die folgende Merkmale aufweist:

- eine Einrichtung zum Erzeugen eines Kurbelwinkelsignals;
- eine Meßeinrichtung zum Messen der Periode für jeden Zylinder und jeden halben Motorzyklus, während der sich die Kurbelwelle um einen vorbestimmten Winkelbereich dreht, basierend auf dem Kurbelwinkelsignal;
- eine Berechnungseinrichtung zum Berechnen (S111) des Unterschieds zwischen einer augenblicklich gemessenen Periode und der Periode, die einen halben Motorzyklus früher gemessen wurde;
- eine Herleitungseinrichtung zum Herleiten (S111) eines Fehlzündungs-Unterscheidungswerts (LU) aus dem Änderungsbetrag zwischen dem augenblicklichen Unterschied und dem Unterschied, der einen halben Motorzyklus früher berechnet wurde;
- eine Unterscheidungseinrichtung zum Unterscheiden eines fehlgezündeten Zylinders, wenn der Fehlzündungs-Unterscheidungswert (LU) eine Schwelle überschreitet,

dadurch gekennzeichnet,
daß der vorbestimmte Winkelbereich kleiner ist als der zwischen den oberen Totpunkten des Kompressionshubs aufeinanderfolgender Zylinder und den Bereich einschließt, in dem der Verbrennungszustand die Drehzahl der Kurbelwelle stark beeinflußt.

**8.** Vorrichtung nach Anspruch 7, dadurch gekennzeichnet, daß der Winkelbereich zwischen 45° nach dem oberen Totpunkt des Kompressionshubs und 135° nach dem oberen Totpunkt des Kompressionshubs liegt.

**9.** Vorrichtung nach Anspruch 7 oder 8, dadurch gekennzeichnet, daß die Fehlzündungs-Unterscheidungswert-Berechnungseinrichtung den Fehlzündungs-Unterscheidungswert (LU) auf der Grundlage der folgenden Gleichung berechnet:

$$LU = \frac{(Talt2 - Talt4) - (Tneu - Talt2)}{Ti}$$

wobei Tneu die augenblicklich gemessene Periode ist, Talt2 die Periode, die einen halben Zyklus vor dem aktuellen Zyklus gemessen wurde, ist, Talt4 die Periode ist, die einen Zyklus vor dem aktuellen Zyklus gemessen wurde und Ti entweder Tneu oder Talt2 oder Talt4 ist

**10.** Vorrichtung nach einem der Ansprüche 7 bis 9, gekennzeichnet durch
eine Übergangsantriebszustands-Erfassungseinrichtung zum Erfassen eines Übergangsantriebszustands des Motors, wobei der Übergangsantriebszustand einen Beschleunigungszustand oder einen Verzögerungszustand einschließt, wobei die Übergangsantriebszustands-Erfassungseinrichtung eine Unterscheidung eines fehlgezündeten Zylinders während des Übergangsantriebszustands und während einer vorbestimmten Zeit nach dem Erlöschen des Übergangsantriebszustands verhindert.

**11.** Vorrichtung nach einem beliebigen der Ansprüche 7 bis 10, gekennzeichnet durch
eine Schwellen-Veränderungs- und -Einstell-Einrichtung zum variablen Einstellen der Schwelle durch Berechnen eines Änderungsverhältnisses des Fehlzündungs-Unterscheidungswerts (LU) und durch Einstellen der Schwelle als Reaktion auf das Änderungsverhältnis.

**12.** Vorrichtung nach einem beliebigen Anspruch 7 bis 10, gekennzeichnet durch
eine Einrichtung zum Berechnen der Motordrehzahl auf der Grundlage des Kurbelwinkelsignals; und
eine Schwellen-Veränderungs- und -Einstell-Einrichtung zum variablen Einstellen der Schwelle durch Berechnen eines Änderungsverhältnisses des Fehlzündungs-Unterscheidungswerts und durch Einstellen der Schwelle als Reaktion auf das Änderungsverhältnis und den quadratischen Wert der Motordrehzahl.

## Revendications

**1.** Procédé pour détecter un cylindre à défaut d'allumage d'un moteur à combustion interne à plusieurs cylindres, comprenant les étapes consistant à:
- générer un signal d'angle de manivelle,
- mesurer, pour chaque cylindre et pour chaque demi-temps de moteur, le laps de temps pendant lequel le villebrequin tourne suivant une plage angulaire prédéterminée, sur base dudit signal d'angle de manivelle,
- calculer (S111) la différence entre un laps de temps actuellement mesuré et le laps de temps mesuré un demi-temps de moteur auparavant,
- dériver (S111) une valeur de discrimination de défaut d'allumage (LU) de la quantité de variation entre la différence actuelle et la différence calculée un demi-temps de moteur auparavant,
- discrimer (S112-S129) un cylindre à défaut d'allumage si la valeur de discrimination de défaut d'allumage (LU) excède un seuil,

caractérisé en ce que ladite plage angulaire prédéterminée est plus petite que celle entre les points morts supérieurs de la course de compression de cylindres consécutifs et comprend la plage dans laquelle l'état de combustion a une forte influence sur la vitesse de rotation du villebrequin.

**2.** Procédé suivant la revendication 1, caractérisé en ce que la plage angulaire est comprise entre 45° après le centre mort supérieur de la course de compression et 135° après le centre mort supérieur de la course de compression.

**3.** Procédé suivant la revendication 1 ou 2, caractérisé en ce que la valeur de discrimination de défaut d'allumage (LU) est calculée sur base de la formule suivante:

$$LU = \frac{(Tancien2\text{-}Tancien4) - (Tnouveau\text{-}Tancien2)}{Ti}$$

où le Tnouveau est le laps de temps actuellement mesuré, Tancien2 est le laps de temps mesuré un demi-temps avant l'actuel, Tancien4 est le laps de temps mesuré un temps avant l'actuel et Ti est l'un ou l'autre parmi Tnouveau ou Tancien2 ou Tancien4.

**4.** Procédé suivant l'une des revendications 1 à 3, caractérisé par l'étape consistant à détecter (S76) un état de conduite de transition du moteur, ledit état de conduite de transition comprenant un état d'accélération ou un état de décélération, où la discrimination d'un cylindre à défaut d'allumage est interdit pendant l'état de conduite de transition et pendant un laps de temps prédéterminé après l'écoulement de l'état de conduite de transition.

**5.** Procédé suivant l'une quelconque des revendications 1 à 4, caractérisé en ce que ledit seuil est réglé de manière variable en calculant (S3-S11) un taux de variation de ladite valeur de discrimination de défaut d'allumage (LU) et en réglant (S13, S14) ledit seuil en réponse audit taux de variation.

**6.** Procédé suivant l'une quelconque des revendications 1 à 4, caractérisé en ce

que la vitesse de rotation de moteur est calculée sur base du signal d'angle de manivelle, et

que ledit seuil est réglé de manière variable en calculant un taux de variation de ladite valeur de discrimination de défaut d'allumage et en réglant (S12, S13, S14) ledit seuil en réponse audit taux de variation et à la valeur du carré de la vitesse de rotation de moteur.

**7.** Appareil pour détecter un cylindre à défaut d'allumage d'un moteur à combustion interne à plusieurs cylindres, comprenant:

- un moyen pour générer un signal d'angle de manivelle,
- un moyen de mesure pour mesurer, pour chaque cylindre et pour chaque demi-temps de moteur, le laps de temps pendant lequel le villebrequin tourne d'une plage angulaire prédéterminée, sur base dudit signal d'angle de manivelle,
- un moyen de calcul pour calculer (S111) la différence entre un laps de temps actuellement mesuré et le laps de temps mesuré un demi-temps de moteur auparavant,
- un moyen de dérivation pour dériver (S111) une valeur de discrimination de défaut d'allumage (LU) de la quantité de variation entre la différence actuelle et la différence calculée un demi-temps de moteur auparavant,
- un moyen de discrimination pour discrimer un cylindre à défaut d'allumage si la valeur de discrimination de défaut d'allumage (LU) excède un seuil,

caractérisé en ce que ladite plage angulaire prédéterminée est plus petite que celle entre les points morts supérieurs de la course de compression de cylindres consécutifs et comprend la plage dans laquelle l'état de combustion a une forte influence sur la vitesse de rotation du villebrequin.

**8.** Appareil suivant la revendication 7, caractérisé en ce que la plage angulaire est comprise entre 45° après le centre mort supérieur de la course de compression et 135° après le centre mort supérieur de la course de compression.

**9.** Appareil suivant la revendication 7 ou 8, caractérisé en ce que ledit moyen de calcul de la valeur de discrimination de défaut d'allumage (LU) calcule la valeur de discrimination de défaut d'allumage (LU) sur base de la formule suivante:

$$LU = \frac{(Tancien2\text{-}Tancien4) - (Tnouveau\text{-}Tancien2)}{Ti}$$

où le Tnouveau est le laps de temps actuellement mesuré, Tancien2 est le laps de temps mesuré un demi-temps avant l'actuel, Tancien4 est le laps de temps mesuré un temps avant l'actuel et Ti est l'un ou l'autre parmi Tnouveau ou Tancien2 ou Tancien4.

**10.** Appareil suivant l'une des revendications 7 à 9, caractérisé par un moyen de détection d'état de conduite de transition pour détecter un état de conduite de transition du moteur, ledit état de conduite de transition comprenant un état d'accélération ou un état de décélération, ledit moyen de détection d'état de conduite de transition interdisant la discrimination d'un cylindre à défaut d'allumage pendant l'état de conduite de transition et pendant un laps de temps prédéterminé après l'écoulement de l'état de conduite de transition.

**11.** Appareil suivant l'une quelconque des revendications 7 à 10, caractérisé par un moyen de variation et de réglage de seuil pour régler de manière variable ledit seuil en calculant un taux de variation de ladite valeur de discrimination de défaut d'allumage (LU) et en réglant ledit seuil en réponse audit taux de variation.

**12.** Appareil suivant l'une quelconque des revendications 7 à 10, caractérisé par

un moyen pour calculer la vitesse de rotation de moteur sur base du signal d'angle de manivelle, et

un moyen de variation et de réglage de seuil pour régler de manière variable le seuil en calculant un taux de variation de ladite valeur de discrimination de défaut d'allumage et en réglant ledit seuil en réponse audit taux de variation et à la valeur du carré de la vitesse de rotation de moteur.

Fig. 1

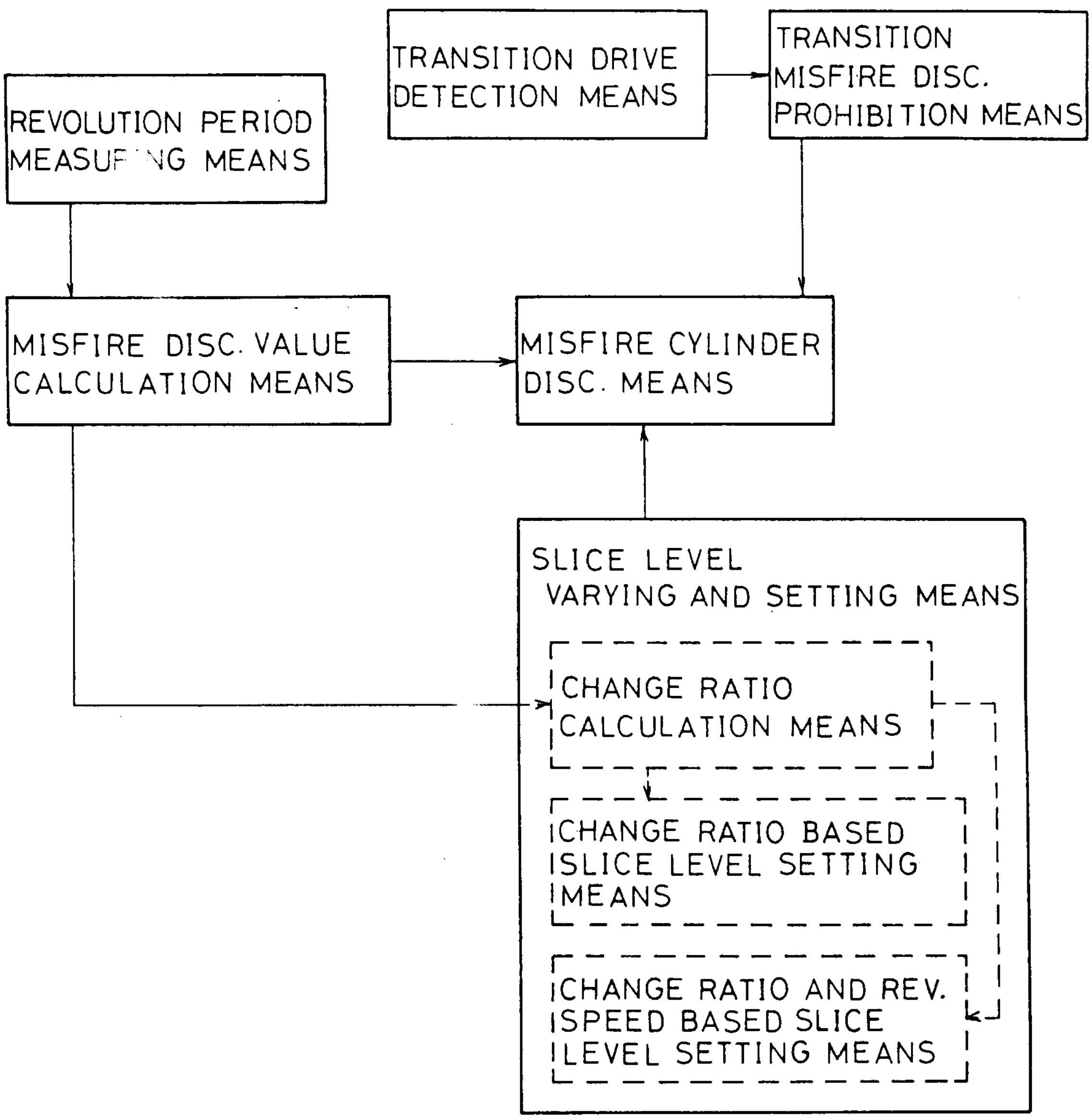
TRANSITION DRIVE DETECTION MEANS
TRANSITION MISFIRE DISC. PROHIBITION MEANS
REVOLUTION PERIOD MEASURING MEANS
MISFIRE DISC. VALUE CALCULATION MEANS
MISFIRE CYLINDER DISC. MEANS
SLICE LEVEL VARYING AND SETTING MEANS
CHANGE RATIO CALCULATION MEANS
CHANGE RATIO BASED SLICE LEVEL SETTING MEANS
CHANGE RATIO AND REV. SPEED BASED SLICE LEVEL SETTING MEANS

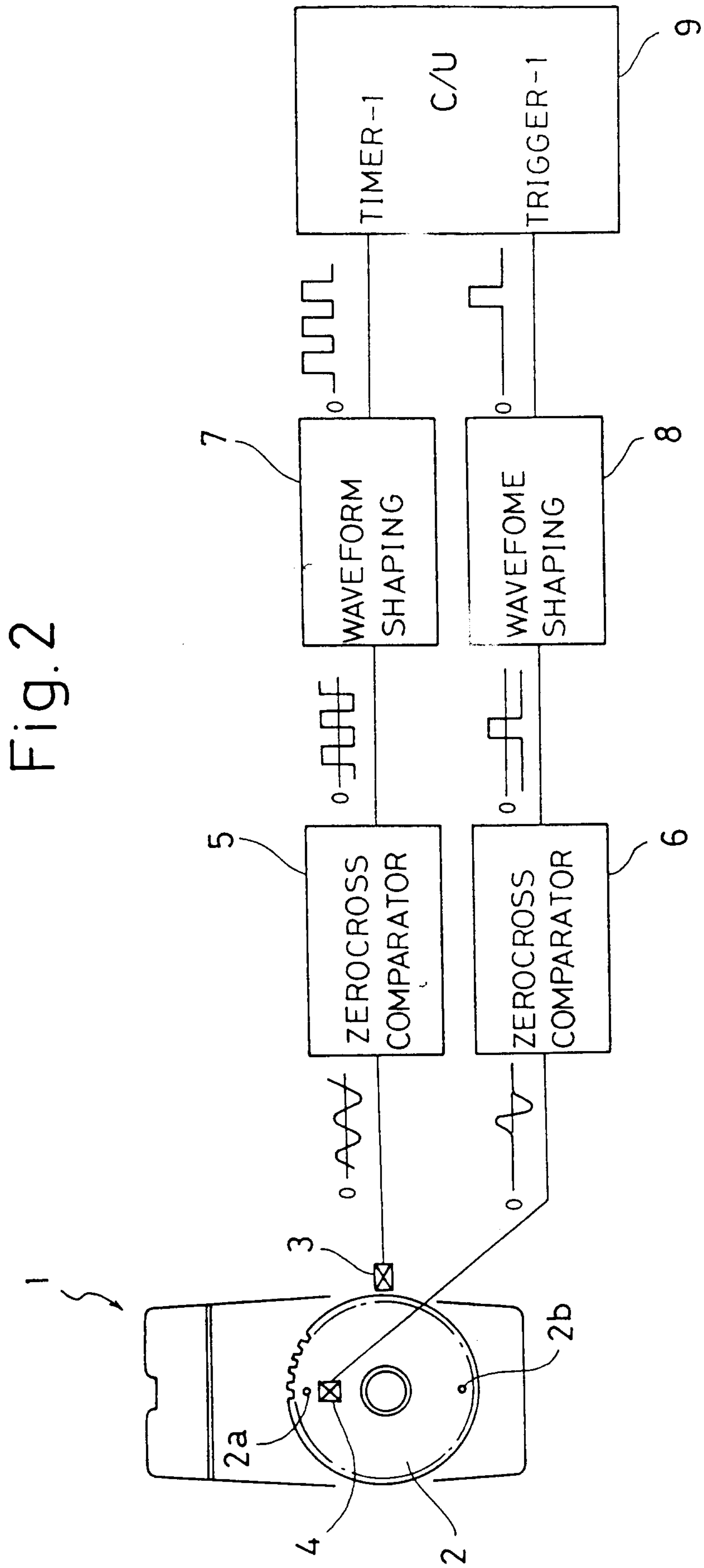
1
2
2a
2b
3
4
5
6
7
8
9
ZEROCROSS COMPARATOR
ZEROCROSS COMPARATOR
WAVEFORM SHAPING
WAVEFOME SHAPING
TIMER-1
C/U
TRIGGER-1
0
0
0
0
0
0

Fig. 2

Fig.3A

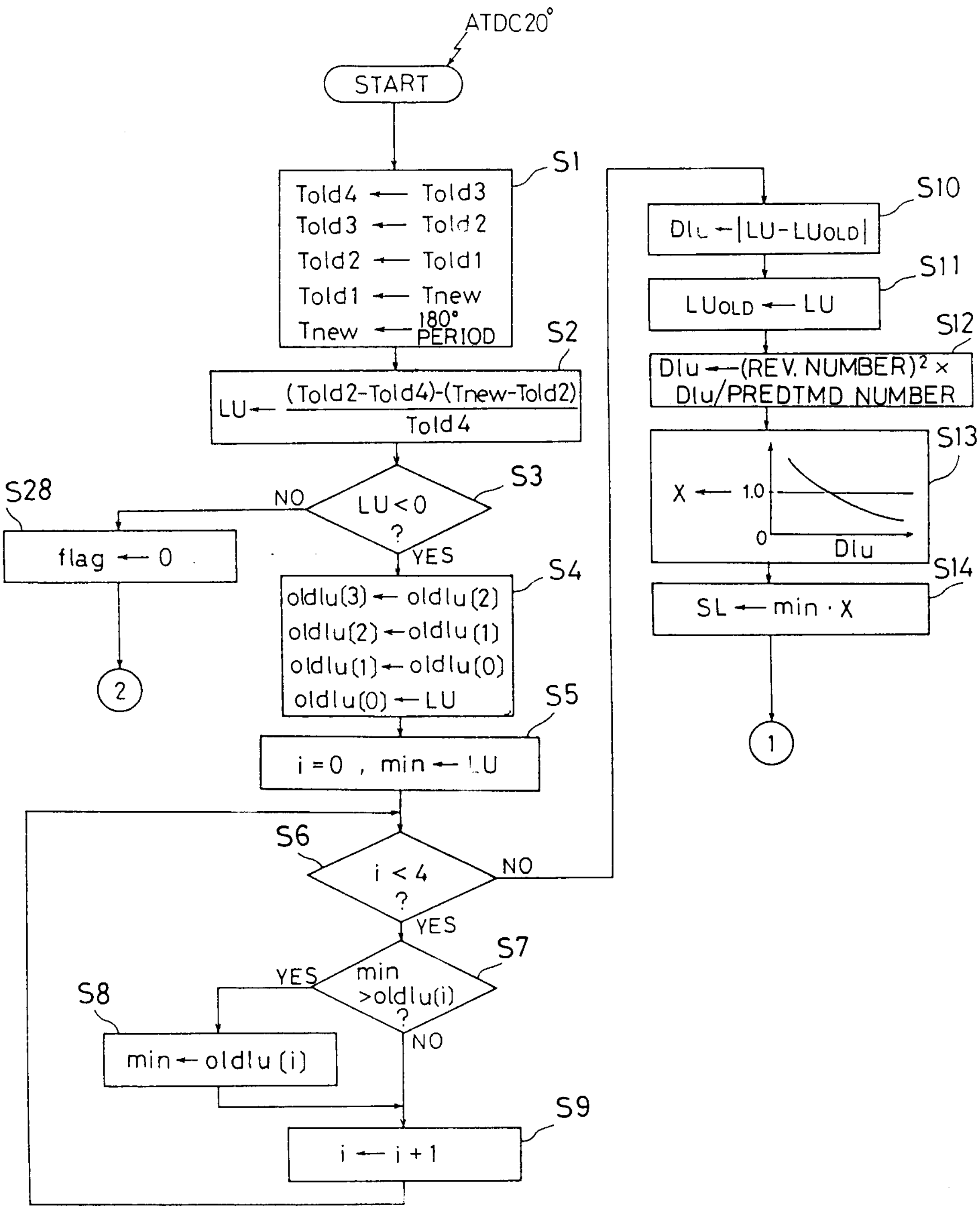
ATDC20°
START
S1
Told4 ← Told3
Told3 ← Told2
Told2 ← Told1
Told1 ← Tnew
Tnew ← 180° PERIOD
S2
LU ← (Told2-Told4)-(Tnew-Told2) / Told4
S3
LU<0 ?
NO
YES
S28
flag ← 0
2
S4
oldlu(3) ← oldlu(2)
oldlu(2) ← oldlu(1)
oldlu(1) ← oldlu(0)
oldlu(0) ← LU
S5
i=0 , min ← LU
S6
i<4 ?
NO
YES
S7
min >oldlu(i) ?
YES
NO
S8
min ← oldlu(i)
S9
i ← i+1
S10
DLu ← |LU-LUOLD|
S11
LUOLD ← LU
S12
DIu ←(REV. NUMBER)² × DIu/PREDTMD NUMBER
S13
X ← 1.0
0
DIu
S14
SL ← min · X
1

Fig. 3B

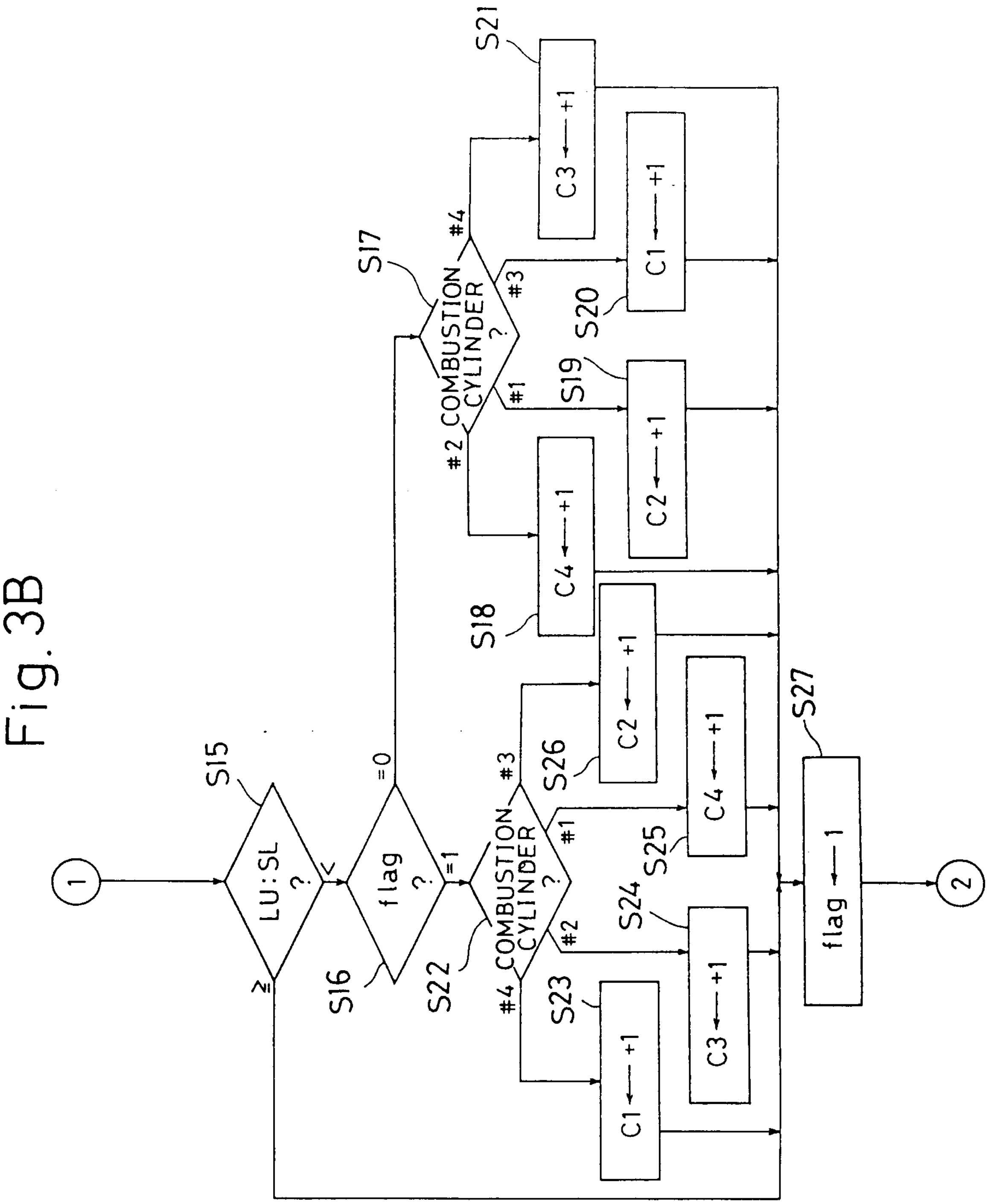
1
S15
LU:SL ?
<
≧
S16
flag ?
=0
=1
S17
COMBUSTION CYLINDER ?
#1
#2
#3
#4
S18
C4 ← +1
S19
C2 ← +1
S20
C1 ← +1
S21
C3 ← +1
S22
COMBUSTION CYLINDER ?
#1
#2
#3
#4
S23
C1 ← +1
S24
C3 ← +1
S25
C4 ← +1
S26
C2 ← +1
S27
flag ← 1
2

Fig. 3C

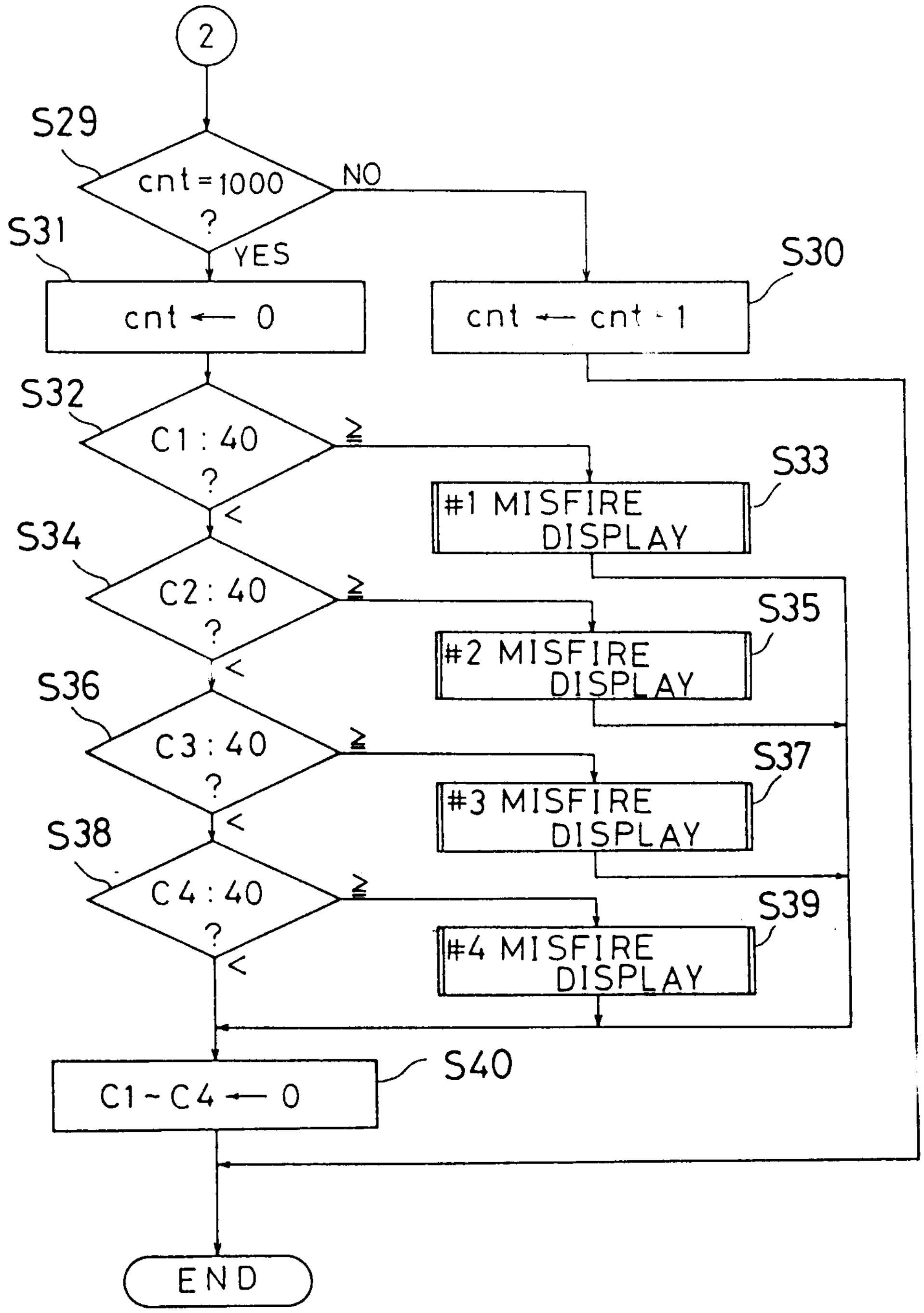
2
S29
cnt=1000 ?
NO
YES
S31
cnt ← 0
S30
cnt ← cnt+1
S32
C1 : 40 ?
≧
<
S33
#1 MISFIRE DISPLAY
S34
C2 : 40 ?
≧
<
S35
#2 MISFIRE DISPLAY
S36
C3 : 40 ?
≧
<
S37
#3 MISFIRE DISPLAY
S38
C4 : 40 ?
≧
<
S39
#4 MISFIRE DISPLAY
S40
C1~C4 ← 0
END

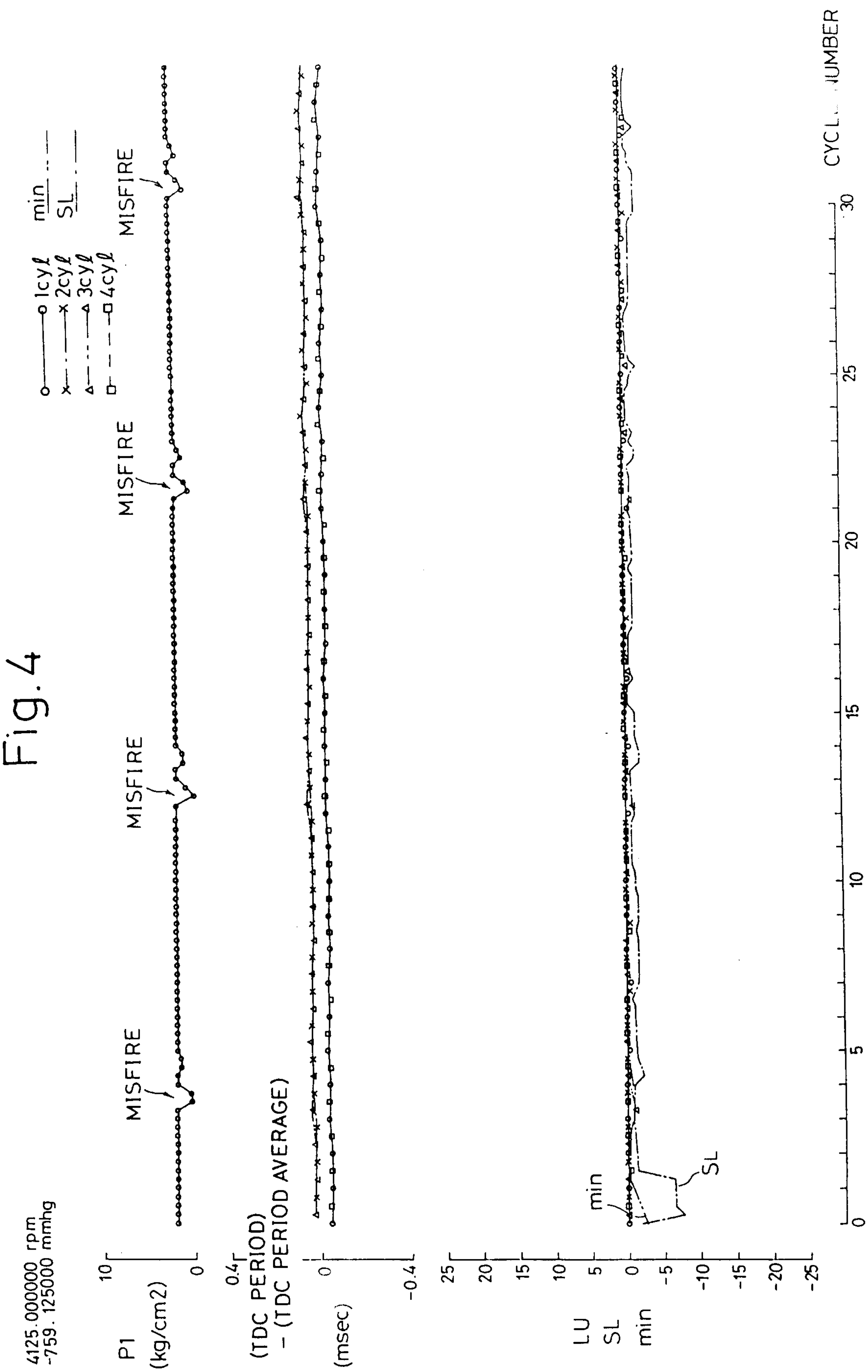
4125.000000 rpm
-759.125000 mmhg
P1
(kg/cm2)
10
0
(TDC PERIOD)
− (TDC PERIOD AVERAGE)
(msec)
0.4
0
-0.4
LU
SL
min
25
20
15
10
5
0
-5
-10
-15
-20
-25
MISFIRE
MISFIRE
MISFIRE
MISFIRE
1cyl
2cyl
3cyl
4cyl
min
SL
min
SL
0
5
10
15
20
25
30

Fig. 4

Fig.5

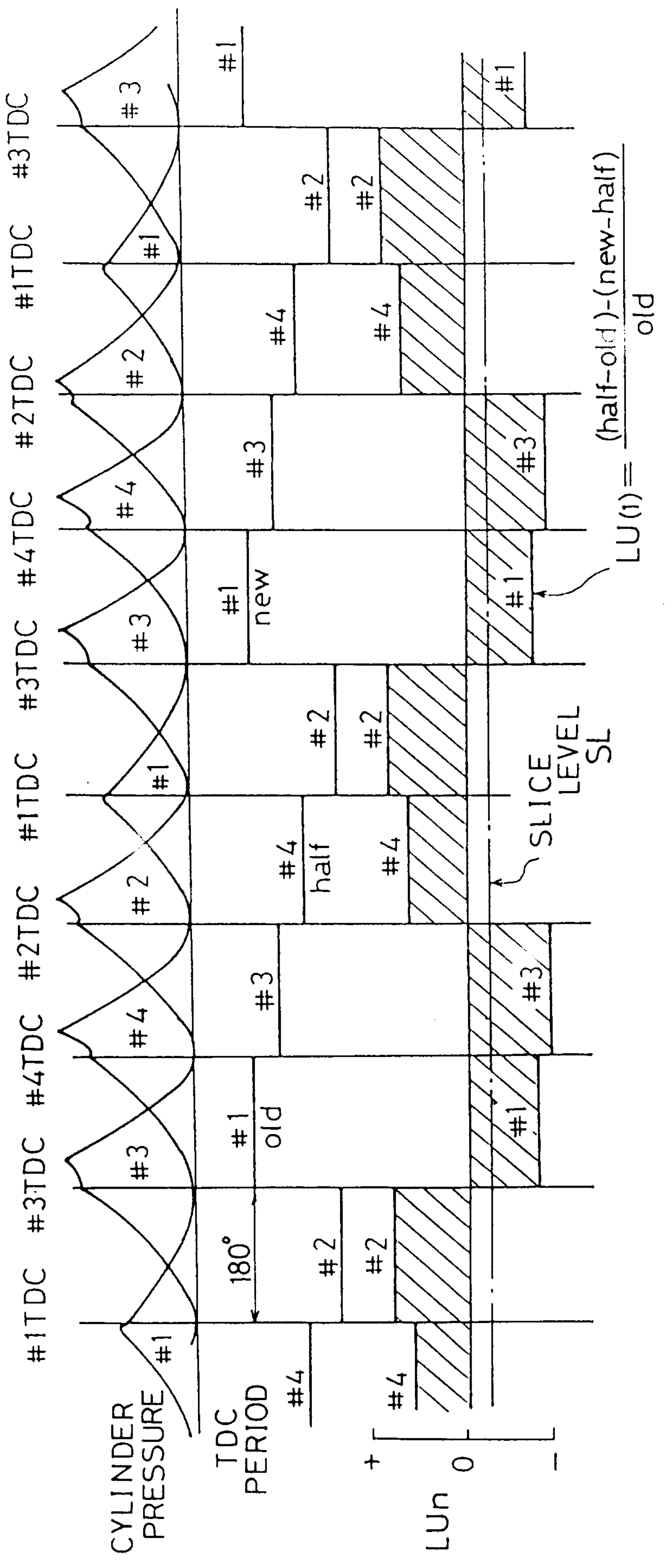

#1TDC
#3TDC
#4TDC
#2TDC
CYLINDER PRESSURE
TDC PERIOD
180°
#1 old
#4 half
#1 new
LUn
+
0
−
SLICE LEVEL SL
LU(1)
$LU_{(1)} = \frac{(half-old)-(new-half)}{old}$

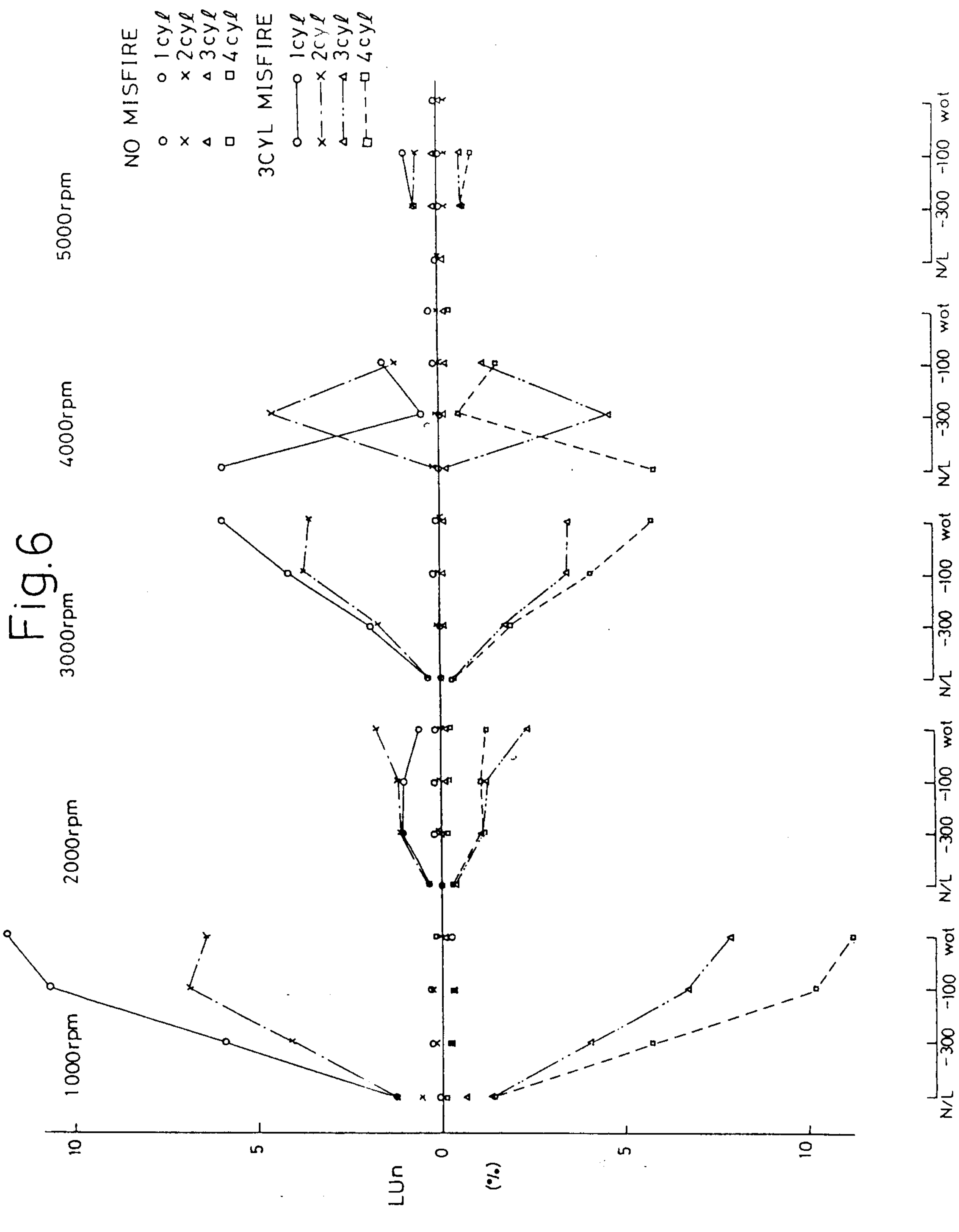
NO MISFIRE
1cyl
2cyl
3cyl
4cyl
3CYL MISFIRE
1cyl
2cyl
3cyl
4cyl
1000rpm
2000rpm
3000rpm
4000rpm
5000rpm
LUn
(%)
10
5
0
5
10
N/L -300 -100 wot
N/L -300 -100 wot
N/L -300 -100 wot
N/L -300 -100 wot
N/L -300 -100 wot

Fig.6

Fig.7

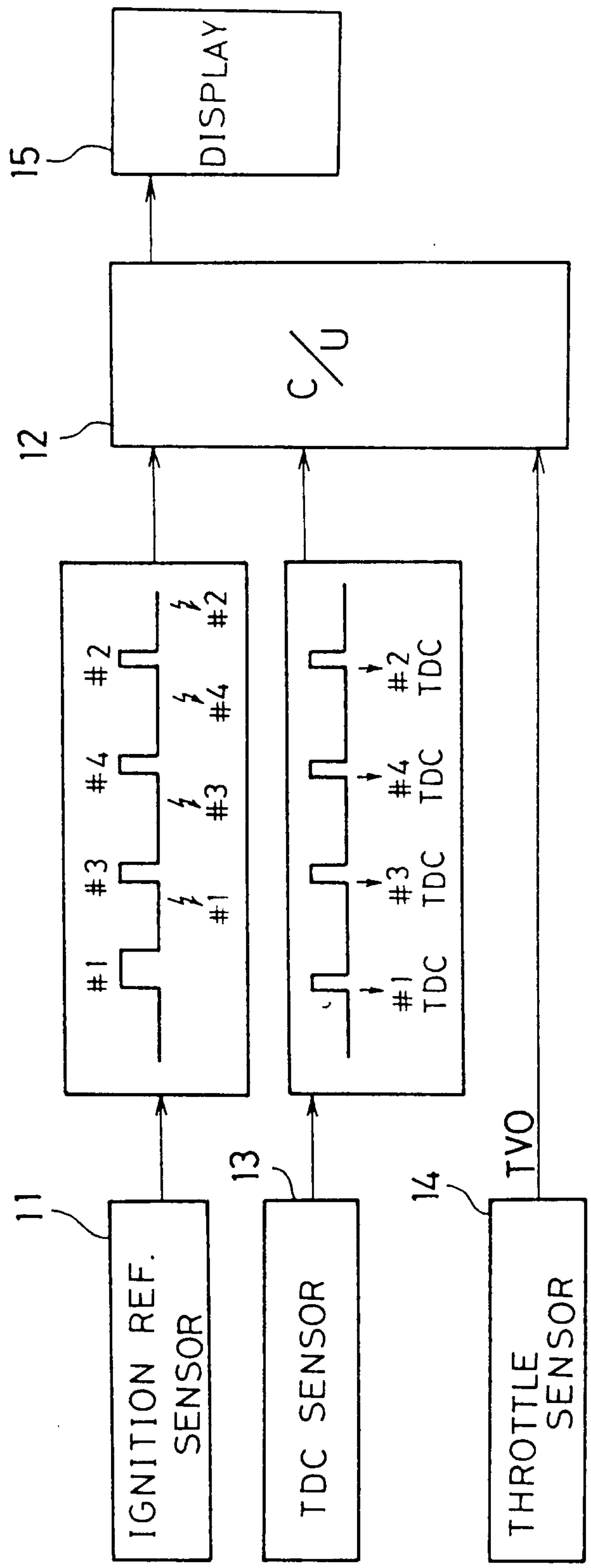
IGNITION REF. SENSOR
11
TDC SENSOR
13
THROTTLE SENSOR
14
TVO
#1
#3
#4
#2
#1
#3
#4
#2
#1 TDC
#3 TDC
#4 TDC
#2 TDC
C/U
12
DISPLAY
15

Fig.8

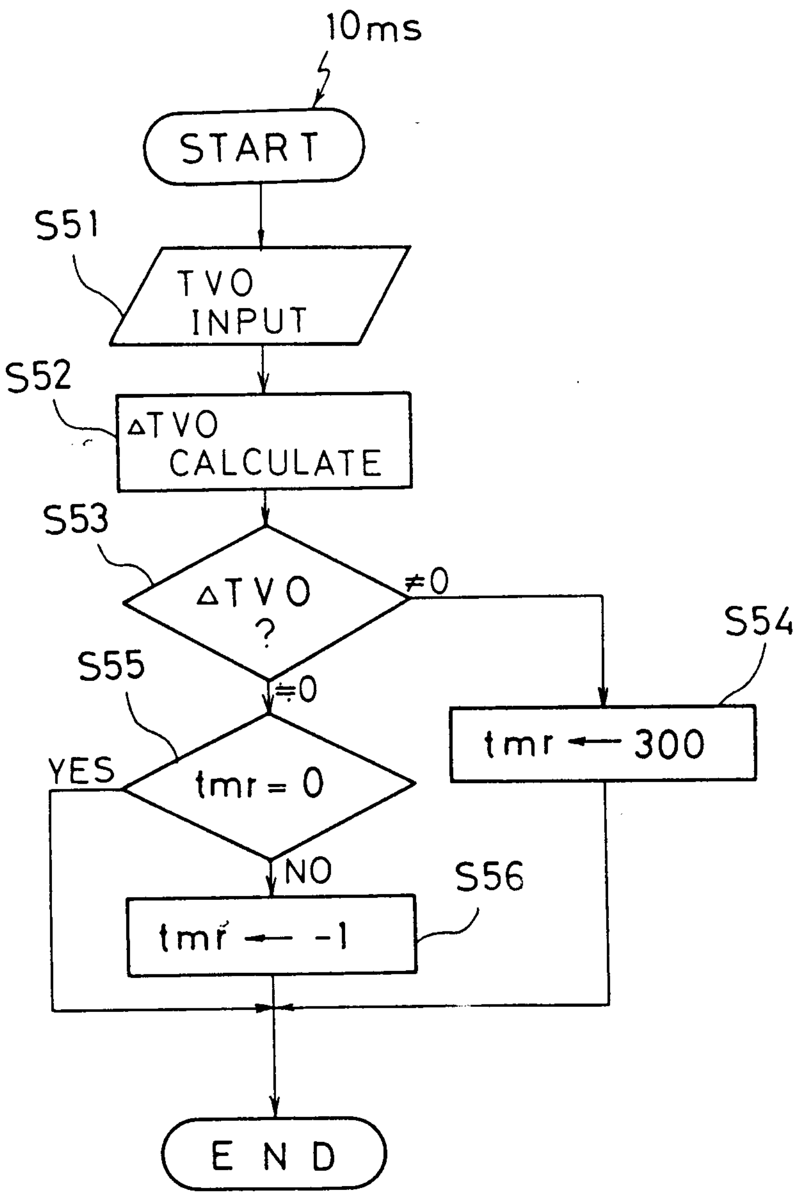
10ms
START
S51
TVO INPUT
S52
ΔTVO CALCULATE
S53
ΔTVO ?
≠0
S54
tmr ← 300
≒0
S55
tmr = 0
YES
NO
S56
tmr ← -1
END

Fig.9

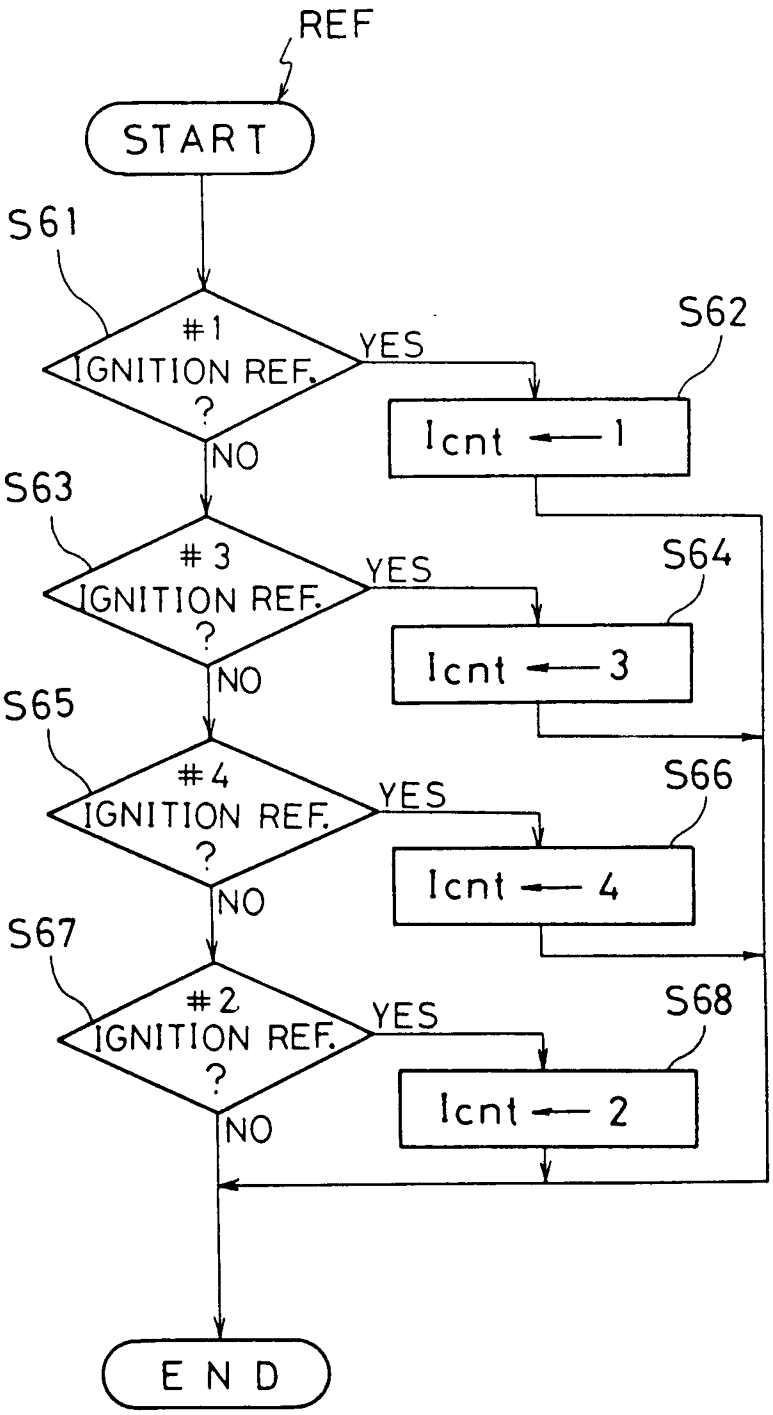
REF
START
S61
#1
IGNITION REF.
?
YES
NO
S62
Icnt ← 1
S63
#3
IGNITION REF.
?
YES
NO
S64
Icnt ← 3
S65
#4
IGNITION REF.
?
YES
NO
S66
Icnt ← 4
S67
#2
IGNITION REF.
?
YES
NO
S68
Icnt ← 2
END

Fig.10

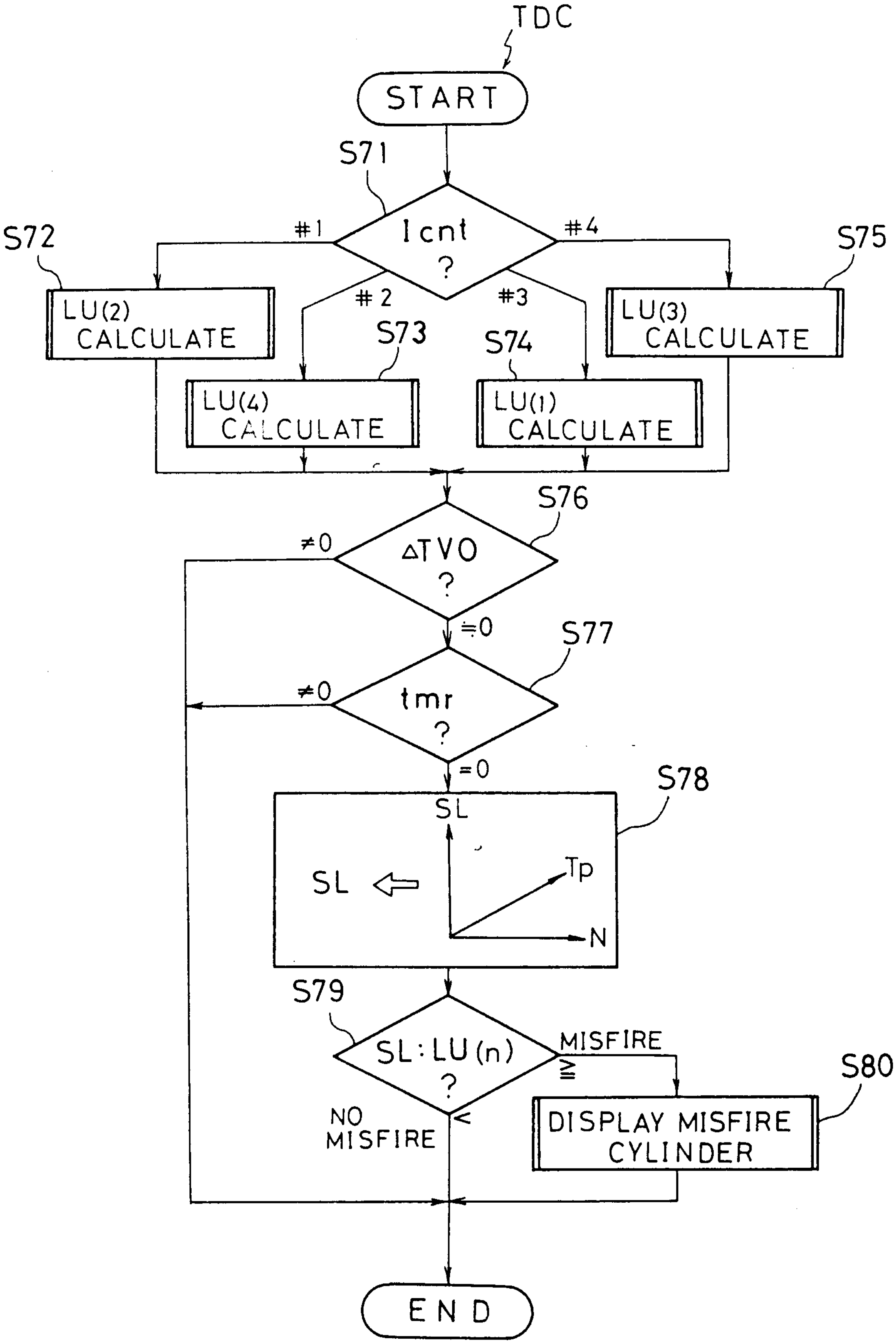
TDC
START
S71
Icnt ?
#1
#2
#3
#4
S72
LU(2) CALCULATE
S73
LU(4) CALCULATE
S74
LU(1) CALCULATE
S75
LU(3) CALCULATE
S76
ΔTVO ?
≠0
≒0
S77
tmr ?
≠0
=0
S78
SL
SL
Tp
N
S79
SL : LU(n) ?
MISFIRE
≧
<
NO MISFIRE
S80
DISPLAY MISFIRE CYLINDER
END

Fig.11

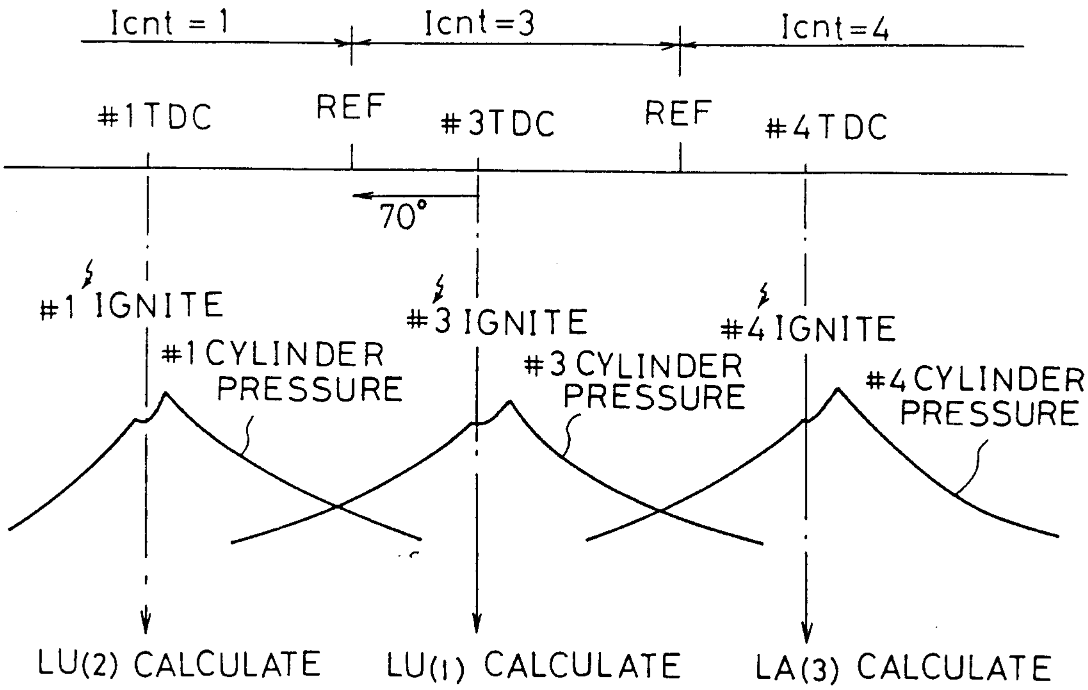
Icnt = 1
Icnt=3
Icnt=4
#1TDC
REF
#3TDC
REF
#4TDC
70°
#1 IGNITE
#1 CYLINDER PRESSURE
#3 IGNITE
#3 CYLINDER PRESSURE
#4 IGNITE
#4 CYLINDER PRESSURE
LU(2) CALCULATE
LU(1) CALCULATE
LA(3) CALCULATE

Fig.15

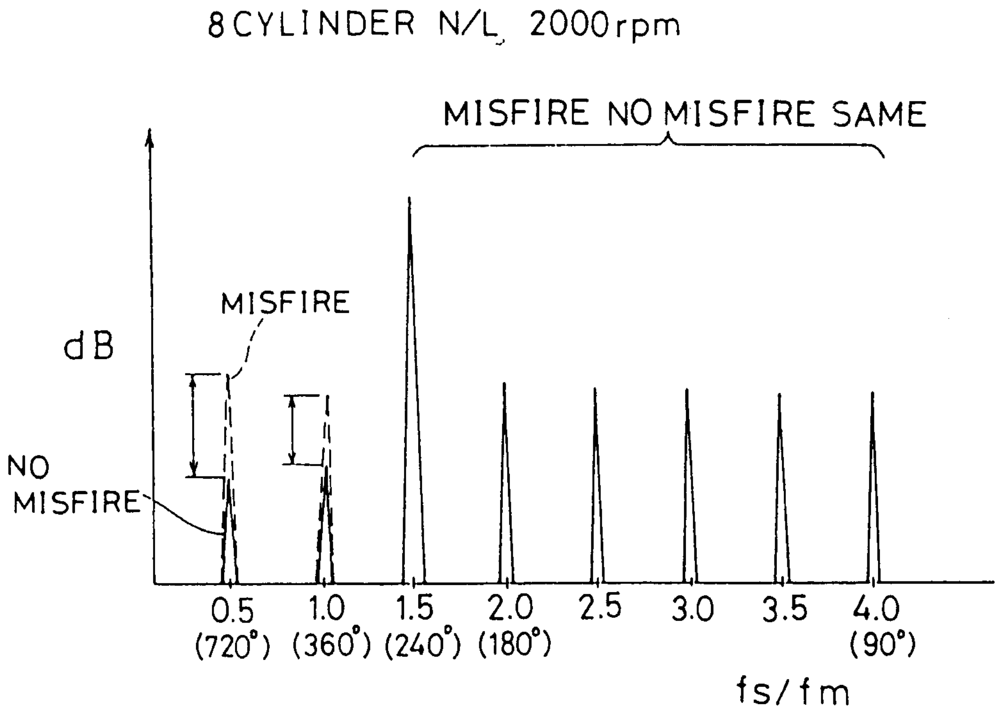
8CYLINDER N/L 2000rpm
MISFIRE NO MISFIRE SAME
MISFIRE
dB
NO MISFIRE
0.5 (720°)
1.0 (360°)
1.5 (240°)
2.0 (180°)
2.5
3.0
3.5
4.0 (90°)
fs/fm

Fig.12

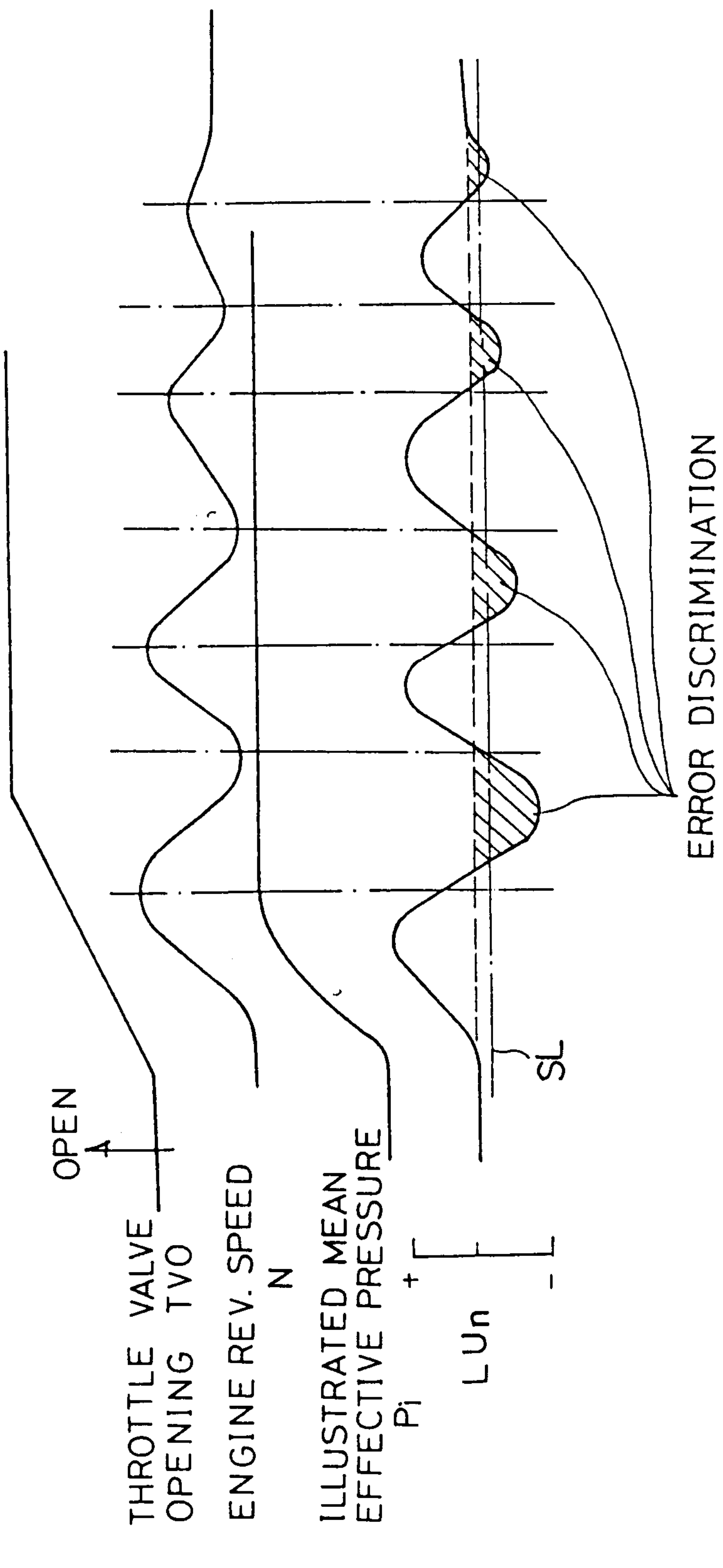
THROTTLE VALVE
OPENING TVO
OPEN
ENGINE REV. SPEED
N
ILLUSTRATED MEAN
EFFECTIVE PRESSURE
Pi
L Un
+
-
SL
ERROR DISCRIMINATION

Fig.13A

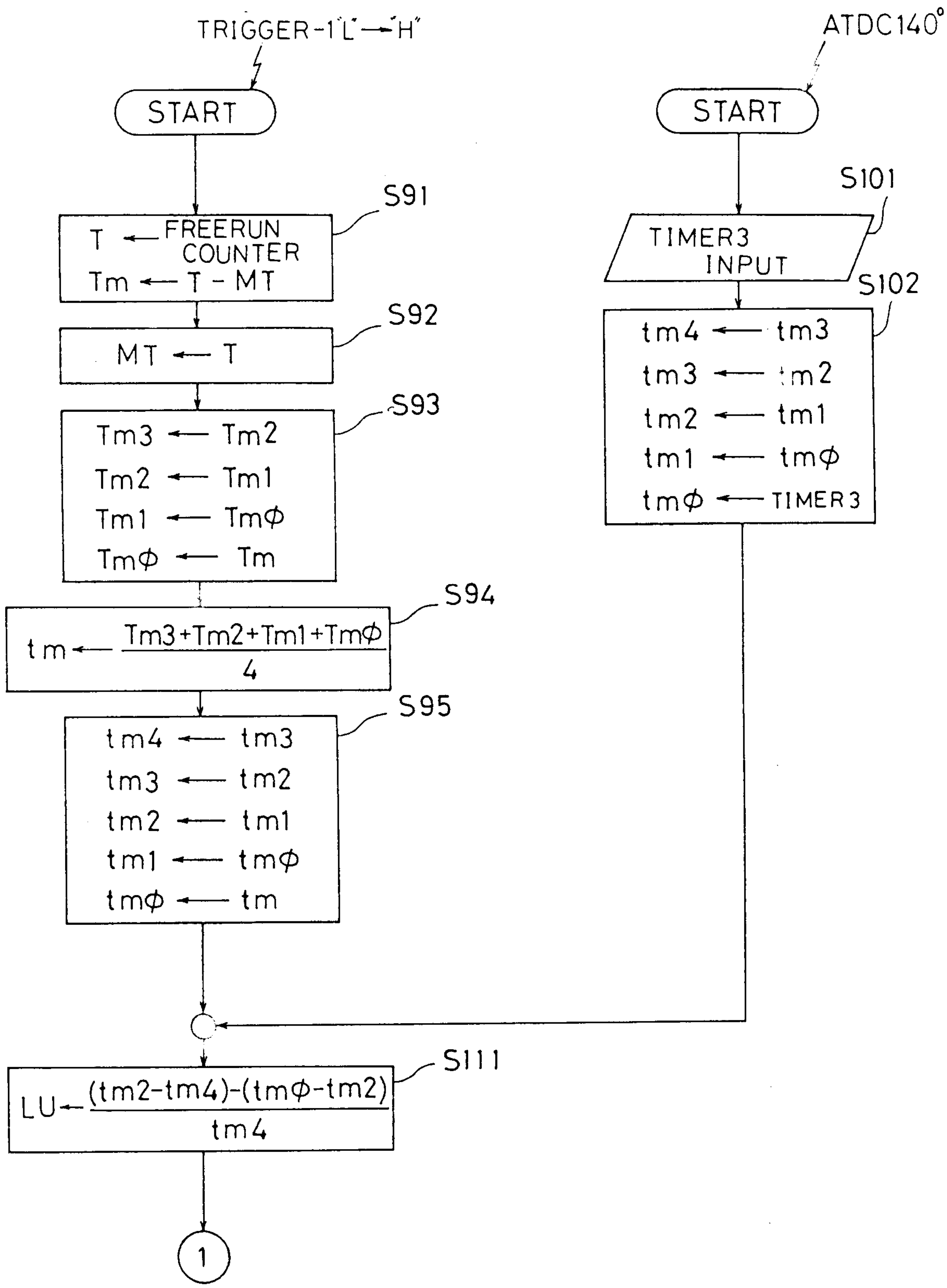
TRIGGER-1"L"→"H"
START
S91
T ← FREERUN COUNTER
Tm ← T - MT
S92
MT ← T
S93
Tm3 ← Tm2
Tm2 ← Tm1
Tm1 ← TmΦ
TmΦ ← Tm
S94
tm ← (Tm3+Tm2+Tm1+TmΦ)/4
S95
tm4 ← tm3
tm3 ← tm2
tm2 ← tm1
tm1 ← tmΦ
tmΦ ← tm
ATDC140°
START
S101
TIMER3 INPUT
S102
tm4 ← tm3
tm3 ← tm2
tm2 ← tm1
tm1 ← tmΦ
tmΦ ← TIMER3
S111
LU ← ((tm2-tm4)-(tmΦ-tm2))/tm4
1

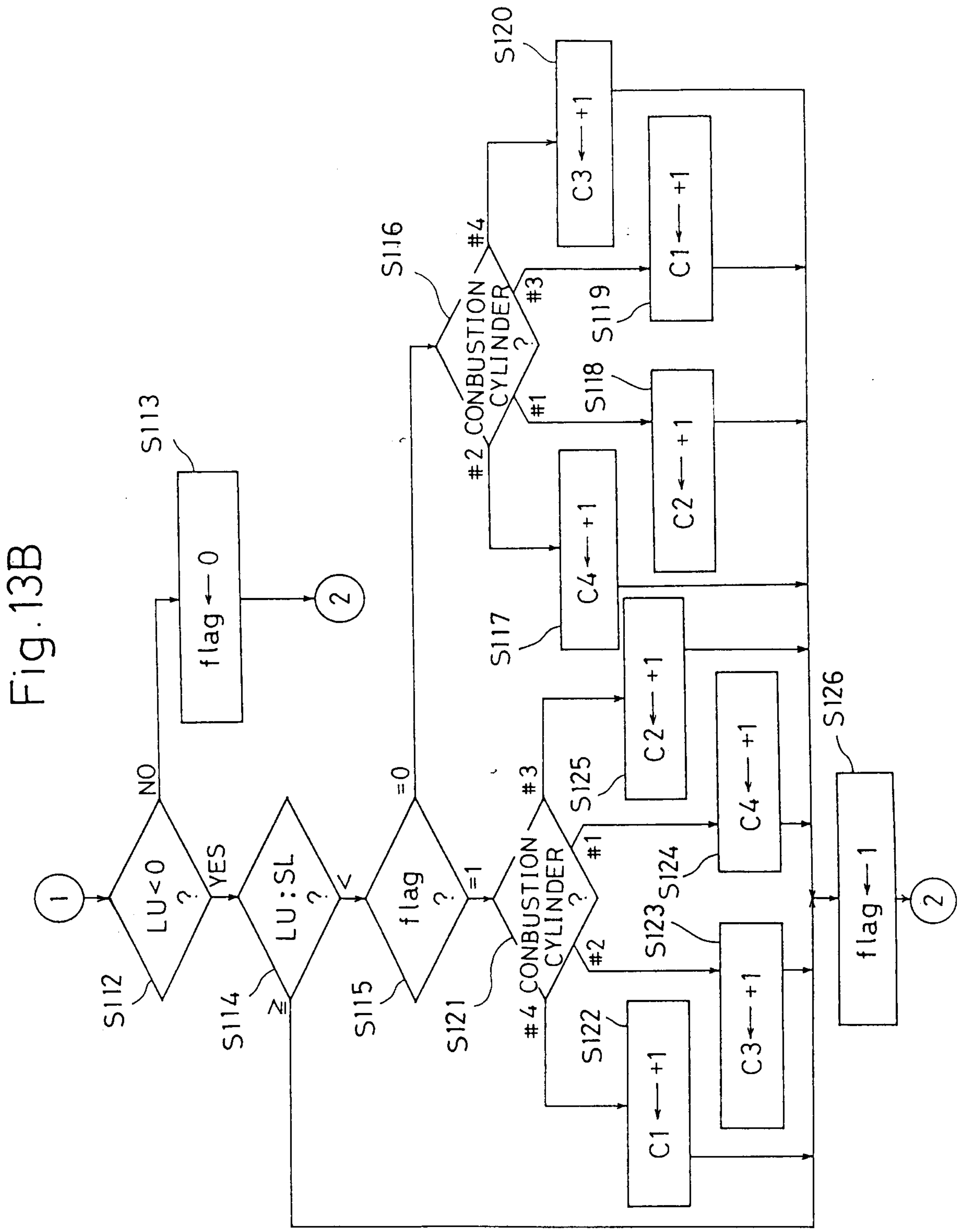
S112
LU<0 ?
YES
NO
S113
flag ← 0
S114
LU : SL ?
<
≧
S115
flag ?
=0
=1
S116
CONBUSTION CYLINDER ?
#1
#2
#3
#4
S117
C4 ← +1
S118
C2 ← +1
S119
C1 ← +1
S120
C3 ← +1
S121
CONBUSTION CYLINDER ?
S122
C1 ← +1
S123
C3 ← +1
S124
C4 ← +1
S125
C2 ← +1
S126
flag ← 1
1
2

Fig.13B

Fig. 13C

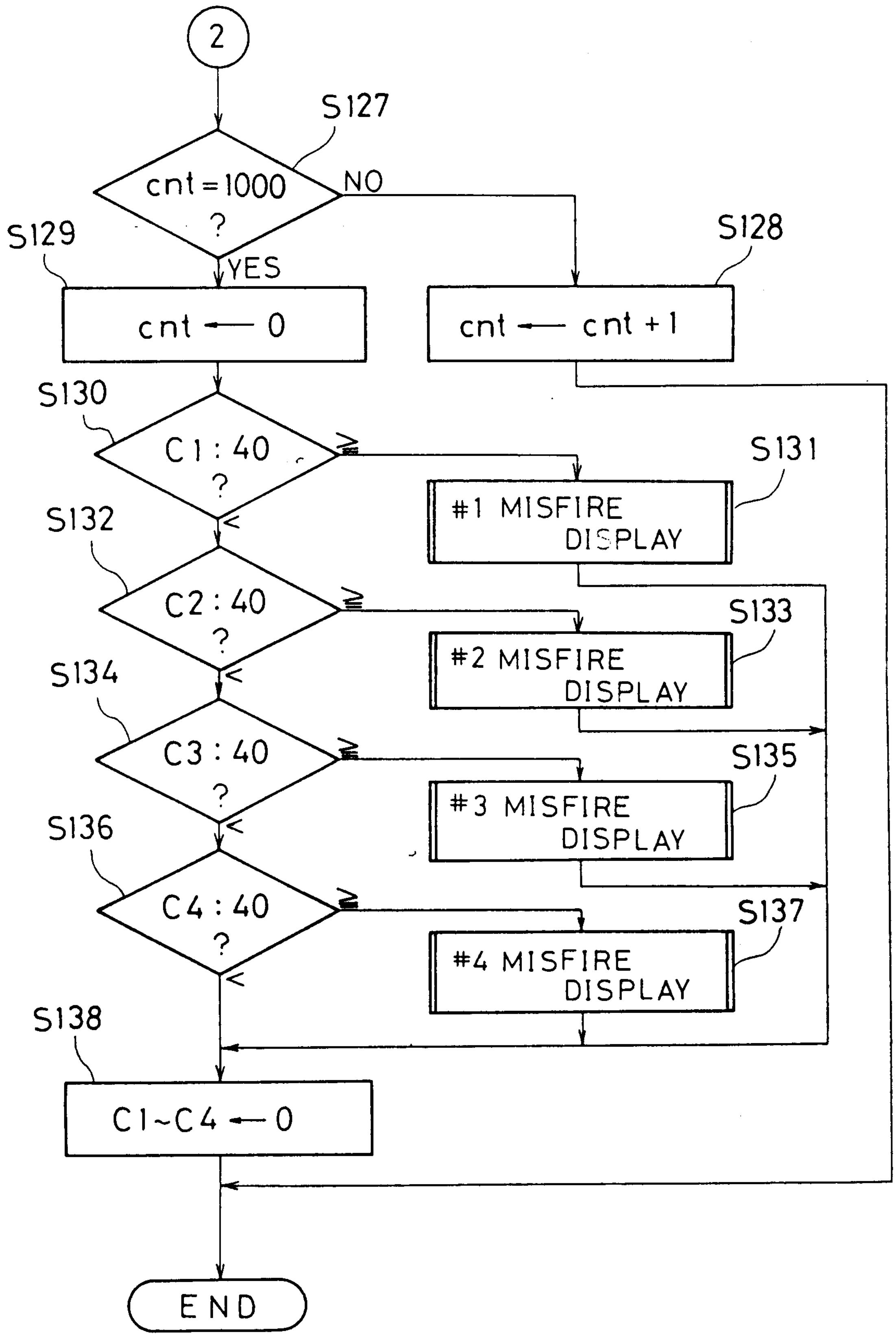
2
S127
cnt = 1000 ?
NO
YES
S129
cnt ← 0
S128
cnt ← cnt + 1
S130
C1 : 40 ?
≧
<
S131
#1 MISFIRE DISPLAY
S132
C2 : 40 ?
≧
<
S133
#2 MISFIRE DISPLAY
S134
C3 : 40 ?
≧
<
S135
#3 MISFIRE DISPLAY
S136
C4 : 40 ?
≧
<
S137
#4 MISFIRE DISPLAY
S138
C1~C4 ← 0
END

Fig. 14

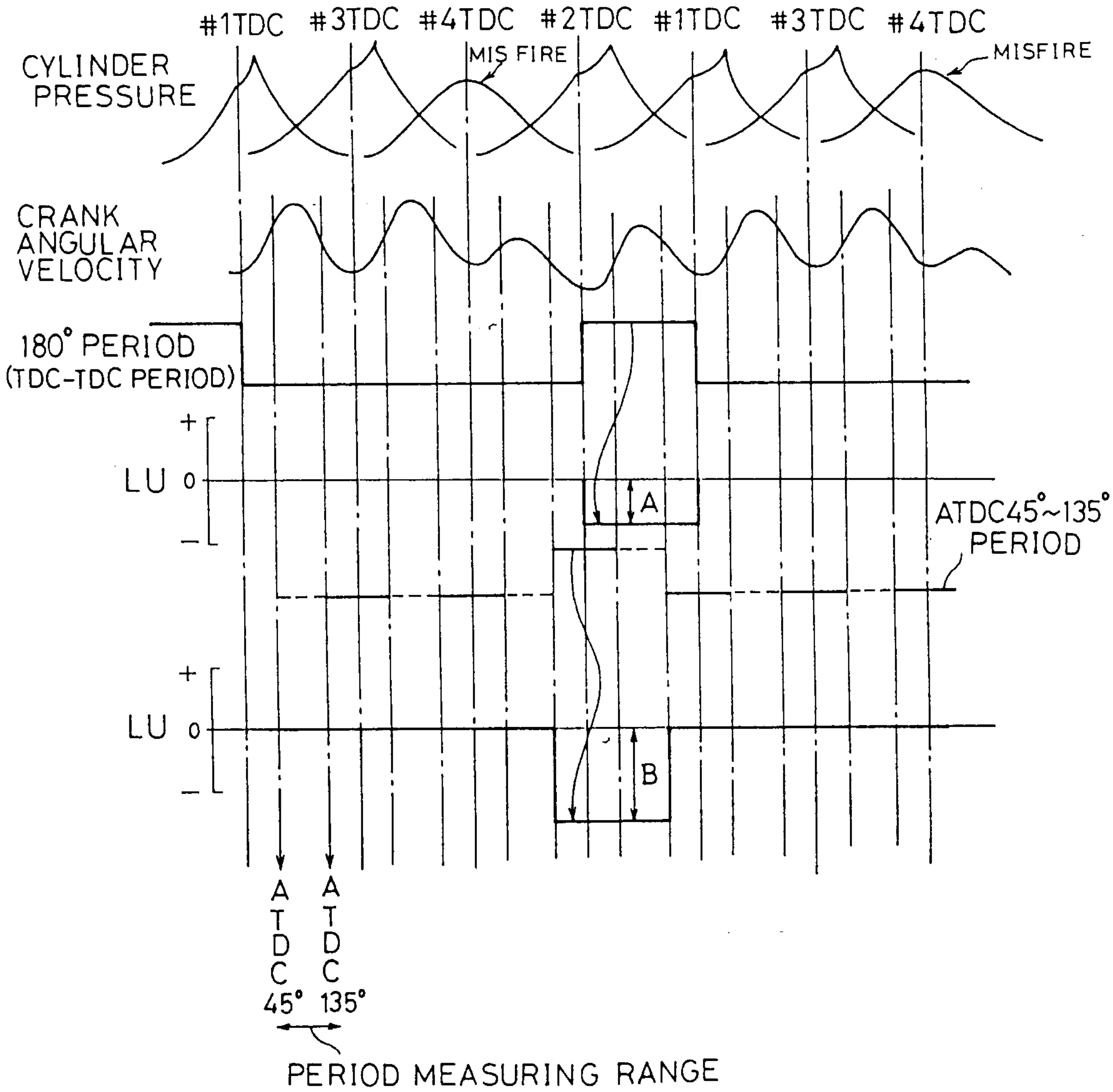
#1TDC
#3TDC
#4TDC
#2TDC
#1TDC
#3TDC
#4TDC
CYLINDER PRESSURE
MIS FIRE
MISFIRE
CRANK ANGULAR VELOCITY
180° PERIOD (TDC-TDC PERIOD)
LU
+
0
−
A
ATDC45°~135° PERIOD
B
ATDC 45°
ATDC 135°
PERIOD MEASURING RANGE